# EUROPÄISCHE PATENTANMELDUNG

(11) **EP 4 056 309 A1**
(43) Veröffentlichungstag der Anmeldung: **14.09.2022**
(21) Anmeldenummer: 21161527.3
(22) Anmeldetag: 09.03.2021
(51) Int. Cl.: B23K 26/03, B23K 26/06, B23K 26/082, B23K 26/08, B23K 26/38, B23K 31/12

(54) **VORRICHTUNG UND VERFAHREN ZUM LASERSCHNEIDEN EINES WERKSTÜCKS UND ERZEUGEN VON WERKSTÜCKTEILEN**

(71) Anmelder: Bystronic Laser AG, 3362 Niederönz (CH)
(72) Erfinder: Haas, Titus, 4800 Zofingen (CH); Scheidiger, Simon, 4900 Langenthal (CH); Steinlin, Markus, 8053 Zürich (CH); Berger, Michael, 3005 Bern (CH)
(74) Vertreter: Patentanwälte Geyer, Fehners & Partner mbB

(57) **Zusammenfassung**

Es wird eine Vorrichtung (10; 100) zum Laserschneiden eines Werkstücks (12) und Erzeugen von Werkstückteilen und ein entsprechendes Verfahren bereitgestellt. Die Vorrichtung besitzt einen Schneidkopf (20) mit einer Laserstrahloptik (28), in der eine dynamische Laserstrahlbewegungseinheit (30) vorgesehen ist. Die Vorrichtung hat eine Schneidkopfbewegungseinheit (32) zum Ausführen einer Bewegung des Laserstrahls über das Werkstück und eine Steuerungseinheit (34). Die Steuerungseinheit besitzt ein Bestimmungsmodul (36) zum Bestimmen mindestens einer Bewegungstrajektorie des Laserstrahls gemäß mindestens einer vorbestimmten Kontur; eine Speichereinheit (38), aus der mindestens ein vorbestimmter Parameter ausgewählt aus einem Bewegungsparameter der Schneidkopfbewegungseinheit, einem Bewegungsparameter der Laserstrahlbewegungseinheit und einem Parameter einer Abweichung einer geschnittenen Kontur von der vorbestimmten Kontur abrufbar ist; und ein Optimierungsmodul (40) zum Anpassen der Bewegungstrajektorie durch eine Überlagerung der Bewegung des Laserstrahls durch den Schneidkopf (20) mit einer hochfrequenten, strahlformenden Bewegung des Laserstrahls durch die Laserstrahlbewegungseinheit (30) auf Basis des aus der Speichereinheit (38) abrufbaren mindestens einen vorbestimmten Parameters.

## Beschreibung

Die Erfindung betrifft eine Vorrichtung zum Laserschneiden eines Werkstücks und Erzeugen von Werkstückteilen, ein Verfahren zum Laserschneiden eines Werkstücks und Erzeugen von Werkstückteilen, sowie ein Computerprogrammprodukt und ein computerlesbares Medium.

Für die Laserbearbeitung von Werkstücken, insbesondere für Verfahren zum thermischen Trennen von Werkstoffen mittels Laserstrahlung, wie Laserschneiden, werden Laserbearbeitungsvorrichtungen eingesetzt. In vielen Fällen wird ein Laserbearbeitungskopf genutzt, mit dem der Bearbeitungslaserstrahl auf das Werkstück gerichtet wird, beispielsweise auf ein zu bearbeitendes Blech. Der Laserbearbeitungskopf wird dabei typischerweise mittels über Aktuatoren betriebenen mechanischen Achsen auf Trajektorien insbesondere in X- und Y-Richtung über das Werkstück geführt. Des Weiteren kann in Bearbeitungsvorrichtungen die optische Achse des Bearbeitungslaserstrahls relativ zur zentralen Achse der Austrittsöffnung des Laserbearbeitungskopfes mittels Aktuatoren bewegt werden.

Es gibt verschiedene Ansätze, um Aktuatoren in Bearbeitungsvorrichtungen zusammenwirken zu lassen, wie z.B. EP1758003 B1, US4532402 A, EP0815499 B1, EP1838486 B1, "Set Point Opitimization for Machine Tools", ETHZ, T. Haas, 2018, und US5109148 A. Diese Ansätze beziehen sich auf Bearbeitungsvorrichtungen, bei denen im Vergleich zu Laserschneidvorrichtungen durch die Aktuatoren geringere Massen bewegt werden und/oder für die Bearbeitung des Werkstücks geringere Leistungen eingesetzt werden. Ferner gibt es Maschinenmodelle, um die kinematischen Eigenschaften von Werkzeugmaschinen zu charakterisieren, wie beispielsweise beschrieben in "Modellbildung und Simulation hochdynamischer Fertigungssysteme, eine praxisnahe Einführung", O. Zirn und S. Weikert, 2006 und weiterhin N. Lanz, D. Spescha, S. Weikert und K. Wegener, "Efficient Static and Dynamic Modelling of Machine Structures with Large Linear Motions," International Journal of Automation Technology, Bd. 12, pp. 622-630, 2018. Weiter sind Modelle zur Schätzung von Oberflächendefekten, und/oder Laserprozess-bedingten Werkstückqualitätsmerkmalen bekannt, siehe z.B. Schuöcker D., Walter B., "Theoretisches Modell der Riefenbildung beim Laserschneiden", in: Waidelich W. Laser/Optoelektronik in der Technik/Laser/Optoelectronics in Engineering, Springer, Berlin, Heidelberg, 1986; M. Brügmann, M. Muralt , B. Neuenschwander, S. Wittwer und T. Feurer, "A theoretical model for reactive gas laser cutting of metals," Lasers in Manufacturing Conference, 2019; und M. Brügmann, M. Muralt, B. Neuenschwander, S. Wittwer und T. Feurer, "Optimization of Reactive Gas Laser Cutting Parameters based on a combination of Semi-Analytical modelling and Adaptive Neuro-Fuzzy Inference System (ANFIS)", Lasers in Manufacturing Conference, 2019.

Bei der Laserbearbeitung von Werkstücken kann es je nach Bearbeitungsprozess und/oder je nach Werkstück, z.B. je nach Dicke und Material eines zu schneidenden Blechs aus Metall, wünschenswert sein, unterschiedliche Laserstrahlen einzusetzen. Einige marktübliche Laserbearbeitungsköpfe stellen ein unveränderbares optisches Abbildungsverhältnis für den Laserstrahl aus der Laserquelle bereit. Diese Art der Abbildung ist aber insbesondere beim Laserschneiden als ein Kompromiss anzusehen: eine fixe Abbildung geht insbesondere bei mittleren bis großen Blechdicken mit Einbußen in der Schnittqualität, d.h. in der Qualität der erzeugten Werkstückteile, namentlich Oberflächenrauheit und Gratanhaftung, sowie mit geringeren Vorschubgeschwindigkeiten einher. In den letzten Jahren wurden Zoom-Optiken für Laserbearbeitungsköpfe entwickelt, um die Spotgröße des fokussierten Laserstrahls an die jeweilige Anwendung anzupassen. Beim Laserschneiden unter Einsatz von Schneidköpfen wird zum Beispiel die Spotgröße des fokussierten Laserstrahls an die Blechdicke und das Material des Blechs angepasst. Einen Schritt weiter in der Adaption des Laserstrahlwerkzeugs an den Bearbeitungsprozess gehen Ansätze, bei denen auch die Intensitätsverteilung und/oder die Strahlqualität des Laserstrahls, z.B. das Strahlparameterprodukt (BPP Beam Parameter Product), an die Laseranwendung angepasst werden können. Verschiedene Lösungen in dieser Richtung sind bekannt, so z.B. US 8781269 B2, US 9250390 B2, US 9346126 B2, EP 2730363 A1, EP2762263 A1, DE2821883 B1, DE 102015116033 A1, EP 2778746 B1, DE 102015101263 A1, DE102008053397 B4.

Hochfrequentes Strahloszillieren gehört zu den Technologien der dynamischen Strahlformung (DBS (Dynamic Beam Shaping)). Dabei wird der Laserstrahl, im Falle eines fokussierten Laserstrahls sein Fokalpunkt, mit Frequenzen von z.B. 100 Hz bis 10 kHz insbesondere senkrecht zur Ausbreitungsrichtung des Laserstrahls bewegt. Auf diese Weise können mit einem in einen Laserbearbeitungskopf integrierten DBS-System nahezu beliebige Intensitätsverteilungen des Laserstrahls erzeugt werden. Dadurch kann z.B. beim Laserschneiden von Blechen eine vorteilhafte Flexibilität bei der Anpassung an die jeweilige Blechdicke und/oder Blechqualität erreicht werden. Die dynamischen Eigenschaften eines DBS-Systems, wie Geschwindigkeit und Beschleunigung, sind groß, z.B. um Faktor 1000 oder mehr höher als diejenigen der mechanischen Achsen der Laserbearbeitungsvorrichtung. Aufgrund des geringen Durchmessers der Austrittsöffnung des Laserbearbeitungskopfs und der limitierten Strahlauslenkung des DBS-Systems ist der Arbeitsbereich des DBS-Systems klein, z.B. einige hundert Mikrometer bis einige Millimeter. Mittels DBS-System angepasstem Laserwerkzeug können bessere Schneidergebnisse erzielt werden, siehe z.B. Wetzig et al.: Fast Beam Oscillations Improve Laser Cutting of Thick Materials, State of the Art and Outlook, PhotonicsViews, 3/2020; Goppold et al.: Chancen und Herausforderungen der dynamischen Strahlformung, Deutscher Schneidkongress, 2018; Goppold et al.: Dynamic Beam Shaping Improves Laser Cutting of Thick Steel Plates, Industrial Photonics, 2017; Goppold et al.: Laserschmelzschneiden mit dynamischer Strahlformung, Fraunhofer IWS Jahresbericht, 2015; Mahrle et al.: theoretical aspects of fibre laser cutting, Journal of Physics D Applied Physics, 2009; https://www.iws.fraunhofer.de/en/pressandmedia/press_releases/2016/press_release_2016-15.html. Das Fraunhofer IWS Dresden hat gezeigt, dass ein Tip-/Tilt-Piezokippspiegel Scannersystem für Dynamic Beam Shaping besonders geeignet scheint (C. Goppold et al., «Tip-Tilt piezo platform scanner qualifies dynamic beam shaping for high laser power in cutting applications», LIM Konferenz, München Juni 2019). Dabei wurde ein ca. 1 Zoll grosser Spiegel an einen Piezoantrieb als Aktuator gekoppelt, welcher den Spiegel hochdynamisch bewegt.

Der Arbeitsbereich der mechanischen Achsen einer Laserschneidvorrichtung in X- und Y-Richtung ist groß, die Dynamik der mechanischen Achsen ist klein, z.B. 1m/s, respektive 10m/s^2. Wegen der dynamischen Grenzen der mechanischen Achsen wird beim Laserschneiden in Ecken und kleinen Radien der zu erzeugenden Werkstückteile die Geschwindigkeit der Bewegung des Schneidkopfs typischerweise reduziert. Oft werden dynamische Grenzen der mechanischen Achsen absichtlich kleiner als physikalisch möglich gewählt, um Fehler in den Konturen, sogenannte Konturfehler, der zu schneidenden Werkstückteile zu reduzieren. Dadurch wird jedoch für den Laserschneidprozess wesentlich mehr Zeit benötigt und die Produktivität der Laserschneidvorrichtung wird signifikant reduziert. Um die Bewegungsgeschwindigkeit des Schneidkopfs nicht so stark reduzieren zu müssen, kann eine Verrundung der zu schneidenden Geometrie bzw. der Trajektorie des Schneidkopfs genutzt werden, insbesondere an Ecken und kleinen Radien der Werkstückteile. Durch die Verrundung können aber unerwünschte Konturfehler, als Abweichung von der Sollkontur des Werkstücks, entstehen.

Aufgabe der Erfindung ist es, eine Vorrichtung und ein Verfahren zum Laserschneiden und zur Erzeugung von Werkstückteilen bereitzustellen, die eine hohe Produktivität und eine hohe Qualität, insbesondere Konturtreue, der geschnittenen Werkstückteile ermöglichen.

Diese Aufgabe wird gelöst durch eine Vorrichtung zum Laserschneiden eines Werkstücks und Erzeugen von Werkstückteilen nach Anspruch 1, ein Verfahren zum Laserschneiden eines Werkstücks und Erzeugen von Werkstückteilen nach Anspruch 11, sowie ein Computerprogrammprodukt nach Anspruch 19 und ein computerlesbares Medium nach Anspruch 20.

Eine Ausführungsform der Erfindung betrifft eine Vorrichtung zum Laserschneiden eines Werkstücks, bevorzugt eines Werkstücks aus einem oder enthaltend mindestens ein Metall, und Erzeugen von Werkstückteilen, mit einem Schneidkopf. Der Schneidkopf weist eine Schnittstelle für eine Laserquelle zum Erzeugen eines Bearbeitungslaserstrahls mit einer Leistung von mindestens 200 W, bevorzugt mindestens 1kW, mehr bevorzugt 1kW bis 40 kW, eine Austrittsöffnung für den Bearbeitungslaserstrahl, und eine Laserstrahloptik zwischen der Schnittstelle und der Austrittsöffnung auf. Die Laserstrahloptik weist mindestens eine dynamische Laserstrahlbewegungseinheit zum Erzeugen einer hochfrequenten, strahlformenden Bewegung des Bearbeitungslaserstrahls zumindest senkrecht zu seiner Ausbreitungsrichtung auf. Die Vorrichtung zum Laserschneiden ist mit einer Schneidkopfbewegungseinheit zum Ausführen einer Bewegung des Bearbeitungslaserstrahls über das Werkstück durch den Schneidkopf; und mit einer Steuerungseinheit zum Steuern der Schneidkopfbewegungseinheit und der Laserstrahlbewegungseinheit versehen. Die Steuerungseinheit weist auf:
- ein Bestimmungsmodul zum Bestimmen mindestens einer Bewegungstrajektorie des Bearbeitungslaserstrahls in mindestens einer Werkstückebene gemäß mindestens einer vorbestimmten Kontur der zu erzeugenden Werkstückteile;
- eine Speichereinheit, aus der mindestens ein vorbestimmter Parameter ausgewählt aus einem Bewegungsparameter der Schneidkopfbewegungseinheit, einem Bewegungsparameter der Laserstrahlbewegungseinheit und einem Parameter einer Abweichung einer geschnittenen Kontur von der vorbestimmten Kontur abrufbar ist; und
- ein Optimierungsmodul zum Anpassen der Bewegungstrajektorie durch eine Überlagerung der Bewegung des Bearbeitungslaserstrahls durch den Schneidkopf mit der hochfrequenten, strahlformenden Bewegung des Bearbeitungslaserstrahls durch die Laserstrahlbewegungseinheit auf Basis des aus der Speichereinheit abrufbaren mindestens einen vorbestimmten Parameters.

Die Vorrichtung der vorstehenden Ausführungsform ermöglicht, anhand des mindestens einen vorbestimmten Parameters mit dem Optimierungsmodul die Bewegungstrajektorie des Bearbeitungslaserstrahls zu optimieren und beim Laserschneiden auszuführen. Die durch die Schneidkopfbewegungseinheit und die Laserstrahlbewegungseinheit ausgelösten Bewegungen des Bearbeitungslaserstrahls sind synchron und überlagern sich daher. Die optimierte Bewegungstrajektorie kann durch eine redundante Aufteilung der Bewegungstrajektorie des Bearbeitungslaserstrahls zwischen der Schneidkopfbewegungseinheit und der Laserstrahlbewegungseinheit realisiert werden. Dies bedeutet beispielsweise, dass das Ausführen der Bewegungstrajektorie zwischen mechanischen Achsen der Schneidkopfbewegungseinheit und einem DBS-System der Laserstrahlbewegungseinheit aufgeteilt wird, die jeweils mit Aktuatoren betrieben den Bearbeitungslaserstrahl in X- und Y-Richtung bewegen. Unter Berücksichtigung des mindestens einen vorbestimmten Parameters können auf diese Weise unerwünschte Abweichungen der Bewegungstrajektorie von einer idealen Bewegungstrajektorie, die der vorbestimmten Kontur der zu erzeugenden Werkstückteile, z.B. einem Schneidplan, entspricht, kompensiert und/oder vermieden werden. Beispielsweise können durch die Dynamik der Schneidkopfbewegungseinheit induzierte Bahnabweichungen der Schneidkopfbewegungseinheit und/oder Konturfehler und/oder Oberflächendefekte der zu erzeugenden Werkstückteile, wie Riefen, Oberflächenrauheit oder anhaftender Grat, reduziert oder vermieden werden. Ferner kann der Schneidprozess zeitlich verkürzt werden, da die optimierte Bewegungstrajektorie ermöglicht, dass die Geschwindigkeit des Schneidkopfs in Ecken und kleinen Radien der zu erzeugenden Werkstückteile nicht reduziert werden muss. Abweichungen zwischen TCP (Tool Center Point, Laserspot) und Sollkontur, die aus Achsfehlern und/oder Vibrationen der Schneidkopfbewegungseinheit resultieren, können kompensiert und daraus resultierende Konturfehler am Werkstück reduziert werden. Dies gilt insbesondere für dynamisch induzierte Konturfehler (am TCP), welche aufgrund der Massen und der Nachgiebigkeit der bewegten Komponenten der Vorrichtung zum Laserschneiden resultieren. Außerdem kann die Schnittspaltbreite optimiert werden. Mittels der optimierten Bewegungstrajektorie kann ferner der Austrieb von beim Schneiden entstehender Schmelze aus dem Schnittspalt bei Einsatz eines Schneidgases verbessert werden.

Somit können durch die Kombination vorteilhafter Eigenschaften der Schneidkopfbewegungseinheit, insbesondere deren großen Arbeitsbereich, und der Laserstrahlbewegungseinheit, insbesondere deren hohen Dynamik, mittels des Optimierungsmoduls die Produktivität der Vorrichtung zum Laserschneiden gesteigert, sowie die Genauigkeit des Laserschneidens, die Schnittqualität und die Qualität der erzeugten Werkstückteile verbessert werden. Beispielsweise können ein hochleistungstauglicher Laserschneidkopf mit integriertem DBS-System und die mechanischen Achsen einer Laserschneidvorrichtung über deren CNC (Computerized Numerical Control)- oder PLC (Programmable Logic Controller)-Steuerung derart kombiniert werden, dass sich eine redundante Bewegungsaufteilung wie oben beschrieben für das Laserstrahlwerkzeug ergibt. Unter Ausnutzung dieser Redundanz, welche durch die Kombination der mechanischen Achsen und des DBS-Systems ermöglicht wird, kann das Verfahren zum Laserschneiden verbessert werden.

In Ausführungsformen kann das Anpassen der Bewegungstrajektorie des Bearbeitungslaserstrahls mit dem Optimierungsmodul während dem Bestimmen der Bewegungstrajektorie mit dem Bestimmungsmodul erfolgen. Alternativ kann mit dem Bestimmungsmodul eine komplette Bewegungstrajektorie des Bearbeitungslaserstrahls gemäß der mindestens einen vorbestimmten Kontur oder Segmenten einer vorbestimmten Kontur der Werkstückteile bestimmt werden, die anhand des mindestens einen vorbestimmten Parameters mit dem Optimierungsmodul angepasst wird. Diese Varianten können auch miteinander kombiniert werden.

Gemäß Ausführungsformen kann der mindestens eine vorbestimmte Parameter Qualitätsoptimierungsparameter, d.h. auf die Qualität der zu erzeugenden Werkstückteile bezogene Parameter, insbesondere den Parameter einer Abweichung einer geschnittenen Kontur von der vorbestimmten Kontur, und/oder Trajektorienoptimierungsparameter, d.h. auf die Bewegungstrajektorie des Bearbeitungslaserstrahls bezogene Parameter, insbesondere den Bewegungsparameter der Schneidkopfbewegungseinheit und/oder den Bewegungsparameter der Laserstrahlbewegungseinheit, beinhalten. Gemäß weiteren Ausführungsformen kann der Bewegungsparameter der Schneidkopfbewegungseinheit die Masse des Schneidkopfs und/oder die Masse einer oder mehrerer träger Komponenten der Schneidkopfbewegungseinheit, z.B. der mechanischen Achsen, beinhalten und/oder zumindest teilweise aus deren Masse resultieren. Ferner kann der Bewegungsparameter der dynamischen Laserstrahlbewegungseinheit die Masse eines dynamisch beweglichen optischen Elements beinhalten und/oder zumindest teilweise aus dessen Masse resultieren. Die Gesamt-Masse des Schneidkopfs und der trägen Komponenten der Schneidkopfbewegungseinheit kann in einem Bereich von 200 bis 500 kg sein, die Masse des Schneidkopfs kann in einem Bereich von 15 bis 20 kg sein, und/oder die Masse des dynamisch beweglichen optischen Elements kann in einem Bereich von 7 und 30 g sein.

Mit der dynamischen Laserstrahlbewegungseinheit kann eine hochfrequente, strahlformende Bewegung des Bearbeitungslaserstrahls zumindest senkrecht zu seiner Ausbreitungsrichtung ausgeführt werden. Insbesondere kann eine hochfrequente Oszillation des Bearbeitungslaserstrahls ausgeführt werden. Im Falle eines fokussierten Bearbeitungslaserstrahls kann auf diese Weise der Fokalpunkt des Bearbeitungslaserstrahls zumindest senkrecht zu dessen Ausbreitungsrichtung hochfrequent bewegt und/oder oszilliert werden. Mit Ausführungsformen der Vorrichtung kann der Bearbeitungslaserstrahl zumindest teilweise mit einer Frequenz zwischen 10 Hz bis 15 kHz, bevorzugt zwischen 100 Hz und 10 kHz, bewegt werden. Beispielsweise kann die dynamische Laserstrahlbewegungseinheit eine dynamisch bewegliche Umlenkeinrichtung, die den Bearbeitungslaserstrahl umlenkt, und/oder eine dynamisch bewegliche optische Einheit, die den Bearbeitungslaserstrahl optisch abbildet, beinhalten.

Die dynamische Laserstrahlbewegungseinheit kann mindestens ein dynamisch bewegliches optisches Element beinhalten. Ferner kann die dynamische Laserstrahlbewegungseinheit mindestens einen Aktuator aufweisen. Das mindestens eine optische Element kann mit dem mindestens einen Aktuator zumindest teilweise dynamisch beweglich und/oder verstellbar sein.

Gemäß Ausführungsformen kann das optische Element mindestens ein Element enthalten ausgewählt aus einer Linse, einer fokussierenden Linse, einer kollimierenden Linse, einer optischen Faser, insbesondere einem Faserende, einer Kupplung für eine optische Faser, einer Endkappe einer optischen Faser, einem Spiegel, einem Umlenkspiegel, einem Segmentspiegel, einem Spiegel mit mindestens einer deformierbaren Oberfläche und einer Kombination davon. Gemäß Ausführungsformen kann der Aktuator mindenstens ein Element enthalten ausgewählt aus einem Piezo-Aktuator, einem Elektromotor, einem pneumatischen Motor, einem Quartzkristall-Oszillator, einem Exzenter, einer Vorrichtung zum Erzeugen eines oszilierenden elektromagnetischen Feldes, einem MEMs (Micro Electro Mechanical System)-Oszillator, einer Schwingspule, einem elektrostatisch bewegbaren Aktuator, einer Mehrzahl davon und/oder einer Kombination davon. Beispielsweise kann als Spiegel mit mindestens einer deformierbaren Oberfläche mindestens ein Element ausgewählt aus einem mit mindestens einem Piezo-Aktuator verformbaren Spiegel, einem bimorph deformierbaren Spiegel, einem auf MEMS- oder MOEMS-Basis deformierbaren Spiegel und einem auf Schwingspulen-Basis deformierbaren Spiegel vorgesehen sein. Gemäß einer weiteren Ausführungsform kann mindestens ein Spiegel vorgesehen sein, der um eine Achse rotierbar ist, die mit einer spiegelnden Ebene des Spiegels einen Winkel einschließt, und der derart orientierbar ist, dass der Winkel größer oder kleiner 90° ist. Dies ermöglicht, dass der Kippwinkel des Spiegels eingestellt werden und der gekippte Spiegel schnell, z.B. mit einer Frequenz von 100Hz bis 10kHz, um seine Achse rotieren kann. Wird der Winkel ungleich 90° eingestellt, beschreibt der Laserstrahl eine Kreisbewegung.

Gemäß Ausführungsformen kann an der Schnittstelle eine Laserquelle zum Erzeugen eines Bearbeitungslaserstrahls mit einer Leistung von mindestens 200 W, bevorzugt mindestens 1kW, mehr bevorzugt 1kW bis 40 kW, vorgesehen sein.

Gemäß Ausführungsformen kann der Bewegungsparameter der Schneidkopfbewegungseinheit mindestens ein Parameter sein ausgewählt aus einer dynamischen Grenze der Schneidkopfbewegungseinheit, einer Verrundungstoleranz der Schneidkopfbewegungseinheit an einem Winkel der vorbestimmten Kontur, und einer Verrundungstoleranz der Schneidkopfbewegungseinheit an einem Radius der vorbestimmten Kontur. Der Bewegungsparameter der Laserstrahlbewegungseinheit kann mindestens ein Parameter sein ausgewählt aus einer dynamischen Grenze der Laserstrahlbewegungseinheit und einer mit der Laserstrahlbewegungseinheit erzeugbaren maximalen Bewegungsamplitude des Bearbeitungslaserstrahls. Der Parameter einer Abweichung einer geschnittenen Kontur von der vorbestimmten Kontur kann mindestens ein Parameter sein ausgewählt aus einer geschätzten Abweichung, einem aus einer gemessenen Abweichung resultierenden Parameter, einer Verrundung der geschnittenen Kontur an einem Winkel der vorbestimmten Kontur, einer Verrundung der geschnittenen Kontur an einem Radius der vorbestimmten Kontur, einem geschätzten Oberflächendefekt einer Schnittkante, und einem aus einem gemessenen Oberflächendefekt einer Schnittkante resultierenden Parameter. Auf Basis eines oder mehrerer der vorgenannten Parameter kann die Bewegungstrajektorie des Bearbeitungslaserstrahls durch das Optimierungsmodul angepasst und so optimiert werden. Dies kann durch geeignetes Aufteilen der Bewegungstrajektorie des Bearbeitungslaserstrahls zwischen der Schneidkopfbewegungseinheit und der Laserstrahlbewegungseinheit realisiert werden. Auf diese Weise kann insbesondere eine optimierte Bewegung der Schneidkopfbewegungseinheit, insbesondere von deren mechanischen Achsen, erzielt werden. Ferner können Konturfehler der zu erzeugenden Werkstückteile reduziert oder vermieden werden.

In Ausführungsformen kann das Optimierungsmodul zum Anpassen der Bewegungstrajektorie auf Basis mindestens einer vergrößerten Verrundungstoleranz der Schneidkopfbewegungseinheit ausgebildet sein. Das Optimierungsmodul kann ferner zum Kompensieren der aus der mindestens einen vergrößerten Verrundungstoleranz resultierenden, insbesondere größeren, Abweichung der geschnittenen Kontur von der vorbestimmten Kontur ausgebildet sein. Dies ermöglicht eine Bewegung des Bearbeitungslaserstrahls durch die Schneidkopfbewegungseinheit mit erhöhten Geschwindigkeiten in Ecken und kleinen Radien der zu erzeugenden Werkstückteile. Dadurch wird für den Laserschneidprozess pro Werkstückteil wesentlich weniger Zeit benötigt und die Produktivität der Vorrichtung zum Laserschneiden wird signifikant erhöht.

Gemäß einer Ausführungsform kann in der Speichereinheit ein Maschinenmodell gespeichert sein, das das kinematische Verhalten des sich bewegenden Schneidkopfs repräsentiert und als Bewegungsparameter der Schneidkopfbewegungseinheit Zustandsdaten der Bewegung des Schneidkopfs und als weiteren Parameter eine daraus resultierende Abweichung der geschnittenen Kontur von der vorbestimmten Kontur schätzt, und wobei das Optimierungsmodul zum Einlesen des Maschinenmodells mit der Speichereinheit in Datenverbindung steht. So können Konturfehler beispielsweise am TCP modellbasiert geschätzt werden und auf dieser Basis kann die Bewegungstrajektorie durch das Optimierungsmodul angepasst werden.

In einer Modifikation von Ausführungsformen, insbesondere einer Modifikation der vorstehenden Ausführungsform, kann das Optimierungsmodul zum Anpassen der Bewegungstrajektorie auf Basis mindestens einer vergrößerten dynamischen Grenze der Schneidkopfbewegungseinheit ausgebildet sein. Das Optimierungsmodul kann ferner zum Kompensieren der aus der mindestens einen vergrößerten dynamischen Grenze resultierenden Abweichung der geschnittenen Kontur von der vorbestimmten Kontur ausgebildet sein. Insbesondere können die Konturfehler aufgrund der mindestens einen vergrößerten dynamischen Grenze vergrößert sein. Die so vergrößerten Konturfehler können durch Ausführungsformen der Vorrichtung und/oder des Verfahrens reduziert oder eliminiert werden. Ferner kann auf diese Weise kann zusätzlich die Produktivität der Vorrichtung zum Laserschneiden erhöht werden.

Gemäß Ausführungsformen kann in der Speichereinheit ein Prozessmodell gespeichert sein, das den Laserschneidprozess repräsentiert und als Parameter Zustandsdaten des Laserschneidprozesses und eine daraus resultierende Abweichung der geschnittenen Kontur von der vorbestimmten Kontur schätzt, und wobei das Optimierungsmodul zum Einlesen des Prozessmodells mit der Speichereinheit in Datenverbindung steht. Insbesondere kann eine Abweichung zwischen entsprechenden Istzustandsdaten und entsprechenden Sollzustandsdaten geschätzt werden. Mit dieser Maßnahme können optimale Prozessparameter, wie z.B. Laserleistung, Schneidgeschwindigkeit, Gasdruck des Schneidgases und Abstand der Austrittsöffnung zum Werkstück, berechnet und durch das Optimierungsmodul berücksichtigt werden zur Anpassung der Bewegungstrajektorie. Durch Nutzen des Prozessmodells kann vor allem die Schnittqualität verbessert werden. Insbesondere eine Kombination einer Ausführungsform mit Prozessmodell und einer Ausführungsform mit Maschinenmodell führt zu vorteilhaften Effekten. Eine Kopplung des Prozessmodells mit dem Maschinenmodell ermöglicht, dass die vom Optimierungsmodul erhaltenen optimierten Prozessparameter lokal, z.B. im Millisekunden-Takt, verfügbar sind. So können unterschiedliche optimierte Prozessparameter für ein und dasselbe Werkstückteil berechnet werden.

In anderen Ausführungsformen kann die Steuerungseinheit eine Datenbank von vorbestimmten 2- und/oder 3-dimensionalen Lissajous-Figuren aufweisen und die Laserstrahlbewegungseinheit kann zum Induzieren einer hochfrequenten Oszillation des Fokalpunktes des Bearbeitungslaserstrahls auf einem Fokalpunktoszillationsweg in Form einer Lissajous-Figur oder einer Kombination von mehr als einer Lissajous-Figur auf Basis der Datenbank ausgebildet sein. So kann in Verbindung mit der optimierten Bewegungstrajektorie die Schnittqualität zusätzlich verbessert werden, insbesondere die Schnittqualität bei Werkstücken höherer Dicke, insbesondere Dicken von 3 mm und mehr.

Ferner kann am oder im Schneidkopf, insbesondere an einer weiteren Schnittstelle, eine mit der Speichereinheit datenleitend verbundene Detektoreinrichtung zur Messung eines Oberflächendefekts einer Schnittkante, insbesondere von Riefen, als den Parameter einer Abweichung der geschnittenen Kontur von der vorbestimmten Kontur vorgesehen sein. So können Oberflächendefekte mindestens einer Schnittkante der erzeugten Werkstückteile, wie Riefen und anhaftender Grat, gemessen und ein daraus resultierender Parameter vom Optimierungsmodul beim Optimieren der Bewegungstrajektorie berücksichtigt werden. Insbesondere kann eine Abweichung zwischen entsprechendem Istzustand, d.h. den Messergebnissen, und entsprechendem Sollzustand, d.h. der vorbestimmten Kontur, ermittelt werden. Auf dieser Basis können beim Schneiden entstehende Oberflächendefekte, wie z.B. beim Brennschneiden entstehende Riefen, kompensiert werden.

In Ausführungsformen kann in der Speichereinheit ein Modell zur Schätzung eines Oberflächendefekts einer Schnittkante, insbesondere von Riefen, gespeichert sein, das als Parameter einen Oberflächendefekt und eine daraus resultierende Abweichung der geschnittenen Kontur von der vorbestimmten Kontur schätzt, und wobei das Optimierungsmodul zum Einlesen des Modells zur Schätzung eines Oberflächendefekts mit der Speichereinheit in Datenverbindung steht. Insbesondere kann eine Abweichung zwischen entsprechenden Istzustandsdaten und entsprechenden Sollzustandsdaten geschätzt werden. So können anhand einer Schätzung von Oberflächendefekten einer Schnittkante, wie Riefen und anhaftender Grat, ein daraus resultierender Parameter bestimmt und vom Optimierungsmodul beim Optimieren der Bewegungstrajektorie berücksichtigt werden. Auch auf diese Weise können beim Schneiden entstehende Oberflächendefekte, wie z.B. beim Brennschneiden entstehende Riefen, kompensiert werden.

In Ausführungsformen kann das Optimierungsmodul beim Anpassen der Bewegungstrajektorie einen Abstand der optischen Achse des Bearbeitungslaserstrahls zur zentralen Achse der Austrittsöffnung des Laserbearbeitungskopfes als vorbestimmten Parameter berücksichtigen. Der Abstand kann zeitweilig oder andauernd eingestellt und/oder konstant oder variabel sein. Das Einstellen des Abstands der optischen Achse relativ zur zentralen Achse der Austrittsöffnung kann beispielsweise der dynamischen Laserstrahlbewegungseinheit zugewiesen und durch diese realisiert werden. Auf diese Weise kann die Bewegungstrajektorie des Bearbeitungslaserstrahls in Ecken und kleinen Radien vorteilhaft genutzt werden um die Qualität zu optimieren.

In weiteren Ausführungsformen kann das Optimierungsmodul beim Anpassen der Bewegungstrajektorie eine durch die Laserstrahlbewegungseinheit auf den Werkstückteilen zu erzeugende Oberflächenstruktur als vorbestimmten Parameter berücksichtigen. Dies kann in einem nachgeschalteten Bearbeitungsprozess vorteilhaft sein, wie z.B. einer Erzeugung einer Klebeverbindung wegen der aus der Oberflächenstruktur resultierenden größeren Oberfläche.

In weiteren Ausführungsformen kann das Optimierungsmodul beim Anpassen der Bewegungstrajektorie eine angepasste, insbesondere optimierte, Schnittspaltbreite als vorbestimmten Parameter berücksichtigen. Beispielsweise kann die Schnittspaltbreite angepasst sein an die Dicke eines Werkstücks, eine Abmessung des Gasstrahls, eine Abmessung der Austrittsöffnung des Schneidkopfs und/oder einen Abstand der zu erzeugenden Werkstückteile voneinander oder von Werkstückverschnitt oder Werkstückresten. Das Anpassen der Schnittspaltbreite kann beispielsweise der dynamischen Laserstrahlbewegungseinheit zugewiesen und durch diese realisiert werden. Damit kann der Schmelzaustrieb durch das Schneidgas optimiert werden, z.B. indem der Durchmesser des Bearbeitungslaserstrahls, insbesondere der Durchmesser des Fokalpunktes, an den Durchmesser des Schneidgasstrahls und/oder an die Abmessung der Austrittsöffnung des Schneidkopfs angepasst wird.

In Ausführungsformen kann das Optimierungsmodul beim Anpassen der Bewegungstrajektorie eine vorbestimmte Schnittspaltbreite als vorbestimmten Parameter berücksichtigen. Beispielweise kann die Schnittspaltbreite beim Laserschneiden zumindest abschnittsweise konstant gehalten werden. Das Einstellen und/oder Einhalten der vorbestimmten, d.h. definierten, Schnittspaltbreite kann beispielsweise der dynamischen Laserstrahlbewegungseinheit zugewiesen und durch diese realisiert werden. Durch die definierte Schnittspaltbreite kann die Entladung der erzeugten Werkstückteile vereinfacht werden, beispielsweise bei Einsatz automatisierter Entladesysteme. Ferner kann ein Kompromiss zwischen einer gewünschten Breite des Schnittspalts und der Laser-Bearbeitungszeit erreicht werden.

In zusätzlichen Ausführungsformen kann das Optimierungsmodul beim Anpassen der Bewegungstrajektorie eine variierende Schnittspaltbreite als vorbestimmten Parameter berücksichtigen. Dadurch kann erreicht werden, dass die variierende Schnittspaltbreite, z.B. unerwünschte Schwankungen der Schnittspaltbreite, kompensiert werden. Ferner kann auf diese Weise die Werkzeugkorrektur kompensiert werden. Zudem kann die Größe und/oder Dicke der Zone der am Werkstück beim Schneiden entstehenden Schmelze im Wesentlichen konstant gehalten werden. Das Kompensieren der variierenden Schnittspaltbreite kann beispielsweise der dynamischen Laserstrahlbewegungseinheit zugewiesen und durch diese realisiert werden. Beispielsweise kann zu diesem Zweck die Laserstrahlbewegungseinheit zum Induzieren einer hochfrequenten Oszillation des Fokalpunktes des Bearbeitungslaserstrahls auf einem Fokalpunktoszillationsweg in Form einer Lissajous-Figur oder einer Kombination von mehr als einer Lissajous-Figur und zum Variieren der Größe der Lissajous-Figur oder der Kombination von mehr als einer Lissajous-Figur ausgebildet sein.

Eine weitere Ausführungsform betrifft eine Verwendung einer Vorrichtung nach einer der vorstehenden Ausführungsformen und Abwandlungen zum Laserschneiden eines Werkstücks, insbesondere eines Werkstücks aus einem oder enthaltend mindestens ein Metall.

Eine Ausführungsform der Erfindung betrifft ein Verfahren zum Laserschneiden eines Werkstücks, bevorzugt eines Werkstücks aus einem oder enthaltend mindestens ein Metall, und Erzeugen von Werkstückteilen mit einer Vorrichtung zum Laserschneiden eines Werkstücks und Erzeugen von Werkstückteilen nach einer der vorstehenden Ausführungsformen und Abwandlungen, wobei an der Schnittstelle eine Laserquelle zum Erzeugen eines Bearbeitungslaserstrahls mit einer Leistung von mindestens 200 W, bevorzugt mindestens 1kW, vorgesehen ist, wobei das Verfahren die Schritte aufweist:
- mittels des Bestimmungsmoduls der Steuerungseinheit Bestimmen mindestens einer Bewegungstrajektorie des Bearbeitungslaserstrahls in mindestens einer Werkstückebene gemäß mindestens einer vorbestimmten Kontur der zu erzeugenden Werkstückteile;
- mittels des Optimierungsmoduls der Steuerungseinheit Anpassen der Bewegungstrajektorie durch eine Überlagerung der Bewegung des Bearbeitungslaserstrahls durch den Schneidkopf mit der hochfrequenten, strahlformenden Bewegung des Bearbeitungslaserstrahls durch die dynamische Laserstrahlbewegungseinheit auf Basis des aus der Speichereinheit abrufbaren mindestens einen vorbestimmten Parameters;
- Erzeugen des Bearbeitungslaserstrahls mit einer Leistung von mindestens 200 W, bevorzugt mindestens 1kW, und Schneiden des Werkstücks mit dem Bearbeitungslaserstrahl; und
- Bewegen des Bearbeitungslaserstrahls über das Werkstück durch den Schneidkopf und hochfrequentes, strahlformendes Bewegen des Bearbeitungslaserstrahls zumindest senkrecht zu seiner Ausbreitungsrichtung durch die Laserstrahlbewegungseinheit gemäß der angepassten Bewegungstrajektorie.

In Ausführungsformen des Verfahrens kann das Anpassen auf Basis mindestens einer vergrößerten Verrundungstoleranz der Schneidkopfbewegungseinheit ausgeführt werden. Das Anpassen kann ferner ein Kompensieren der aus der mindestens einen vergrößerten Verrundungstoleranz resultierenden Abweichung der geschnittenen Kontur von der vorbestimmten Kontur beinhalten.

Gemäß einer Ausführungsform des Verfahrens kann in der Speichereinheit ein Maschinenmodell gespeichert sein, das das kinematische Verhalten des sich bewegenden Schneidkopfs repräsentiert und als Bewegungsparameter der Schneidkopfbewegungseinheit Zustandsdaten der Bewegung des Schneidkopfs und als weiteren Parameter eine daraus resultierende Abweichung der geschnittenen Kontur von der vorbestimmten Kontur schätzt, und wobei das Anpassen ein Einlesen des Maschinenmodells aus der Speichereinheit in das Optimierungsmodul beinhaltet.

Bei Ausführungsformen, insbesondere bei der vorstehenden Ausführungsform, kann das Anpassen auf Basis mindestens einer vergrößerten dynamischen Grenze der Schneidkopfbewegungseinheit ausgeführt werden. Das Anpassen kann ferner ein Kompensieren der aus der mindestens einen vergrößerten dynamischen Grenze resultierenden Abweichung der geschnittenen Kontur von der vorbestimmten Kontur beinhalten.

In weiteren Ausführungsformen des Verfahrens kann in der Speichereinheit ein Prozessmodell gespeichert sein, das den Laserschneidprozess repräsentiert und als Parameter Zustandsdaten des Laserschneidprozesses und eine daraus resultierende Abweichung der geschnittenen Kontur von der vorbestimmten Kontur schätzt, und wobei das Anpassen ein Einlesen des Prozessmodells aus der Speichereinheit in das Optimierungsmodul beinhaltet. Insbesondere kann eine Abweichung zwischen entsprechenden Istzustandsdaten und entsprechenden Sollzustandsdaten geschätzt werden.

Bei dem Verfahren kann die Steuerungseinheit eine Datenbank von vorbestimmten 2- und/oder 3-dimensionalen Lissajous-Figuren aufweisen und die Laserstrahlbewegungseinheit kann eine hochfrequente Oszillation des Fokalpunktes des Bearbeitungslaserstrahls auf einem Fokalpunktoszillationsweg in Form einer Lissajous-Figur oder einer Kombination von mehr als einer Lissajous-Figur auf Basis der Datenbank induzieren.

In Ausführungsformen des Verfahrens kann am oder im Schneidkopf eine mit der Speichereinheit datenleitend verbundene Detektoreinrichtung vorgesehen sein und die Detektoreinrichtung kann einen Oberflächendefekt einer Schnittkante, insbesondere Riefen, als den Parameter einer Abweichung der geschnittenen Kontur von der vorbestimmten Kontur messen. Insbesondere kann eine Abweichung zwischen entsprechendem Istzustand und entsprechendem Sollzustand ermittelt werden. Alternativ oder zusätzlich kann in der Speichereinheit ein Modell zur Schätzung eines Oberflächendefekts einer Schnittkante, insbesondere von Riefen, gespeichert sein, das als Parameter einen Oberflächendefekt und eine daraus resultierende Abweichung der geschnittenen Kontur von der vorbestimmten Kontur schätzt, und das Anpassen kann das Einlesen des Modells zur Schätzung eines Oberflächendefekts aus der Speichereinheit in das Optimierungsmodul beinhalten. Insbesondere kann eine Abweichung zwischen entsprechenden Istzustandsdaten und entsprechenden Sollzustandsdaten geschätzt werden.

Gemäß einer Ausführungsform kann das Verfahren nach einem vorangegangenen Laserschneiden des Werkstücks durchgeführt werden, das mit der durch das Bestimmungsmodul bestimmten mindestens einen Bewegungstrajektorie, insbesondere ohne Einsatz des Optimierungsmoduls, ausgeführt wurde. Dadurch können am Werkstück, insbesondere an der Schnittkante, Oberflächendefekte, wie z.B. anhaftende Schmelze und/oder Schmelztröpfchen und Grat, durch erneutes Bearbeiten der erzeugten Werkstückteile mit dem durch das Optimierungsmodul optimierten Bearbeitungslaserstrahl und gezielter Aufschmelzung und Ausblasen mit einem Schneidgas oder Verdampfen reduziert und/oder entfernt werden.

Eine Ausführungsform der Erfindung betrifft ein Computerprogrammprodukt, umfassend ein oder mehrere Programmmodule, die bewirken, dass die Vorrichtung nach einer der Ausführungsformen und Abwandlungen Schritte des Verfahrens nach einer der Ausführungsformen und Abwandlungen ausführt, insbesondere wenn die Programmmodule in einen Speicher der Vorrichtung geladen werden, insbesondere umfassend mindestens ein Element ausgewählt aus dem Bestimmungsmodul und dem Optimierungsmodul. Das Maschinenmodell, das Prozessmodell und/oder das Modell zur Schätzung eines Oberflächendefekts der Schnittkante jeweils gemäß Ausführungsformen können ebenfalls als Programmmodule ausgebildet sein und/oder im Computerprogramm-produkt enthalten sein.

Eine weitere Ausführungsform betrifft ein computerlesbares Medium, auf dem das Computerprogrammprodukt nach der vorstehenden Ausführungsform gespeichert ist.

Mit den vorstehenden Ausführungsformen des Verfahrens zum Laserschneiden eines Werkstücks und Erzeugen von Werkstückteilen können die gleichen Vorteile und Funktionen realisiert werden, wie mit den Ausführungsformen der Vorrichtung zum Laserschneiden eines Werkstücks und Erzeugen von Werkstückteilen, insbesondere mit gleichlautenden und/oder analogen Merkmalen.

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch ein erstes Ausführungsbeispiel einer Vorrichtung zum Laserschneiden eines Werkstücks und zum Erzeugen von Werkstückteilen;
- Fig. 2: schematisch ein Verfahren zum Laserschneiden und zum Erzeugen von Werkstückteilen gemäß Ausführungsbeispielen;
- Fig. 3: schematisch eine Darstellung des Zusammenwirkens der Komponenten der Vorrichtung gemäß dem ersten Ausführungsbeispiel;
- Fig. 4: schematisch eine Bewegungstrajektorie des Bearbeitungslaserstrahls über dem Werkstück und eine vorbestimmten Kontur eines Werkstückteils gemäß dem ersten Ausführungsbeispiel;
- Fig. 5: schematisch eine Darstellung des Zusammenwirkens der Komponenten der Vorrichtung zum Laserschneiden gemäß einem zweiten Ausführungsbeispiel;
- Fig. 6: schematisch eine Darstellung des Zusammenwirkens der Komponenten der Vorrichtung zum Laserschneiden gemäß einem dritten Ausführungsbeispiel;
- Fig. 7: schematisch eine Darstellung des Zusammenwirkens der Komponenten der Vorrichtung zum Laserschneiden gemäß einem vierten Ausführungsbeispiel;
- Fig. 8: schematisch ein siebtes Ausführungsbeispiel einer Vorrichtung zum Laserschneiden des Werkstücks und zum Erzeugen von Werkstückteilen;
- Fig. 9: schematisch das Zusammenwirken der Komponenten der Vorrichtung zum Laserschneiden gemäß des siebten Ausführungsbeispiels; und
- Fig. 10: schematisch ein Zusammenwirken der Komponenten der Vorrichtung zum Laserschneiden gemäß eines achten Ausführungsbeispiels.

Unter Bewegungstrajektorie, auch Trajektorie genannt, wird vorliegend das zeitliche Abarbeiten der durch das Bestimmungsmodul und/oder das Optimierungsmodul erhaltenen Bewegungsbahnkurven bzw. Bewegungsbahnpunkte für den Bearbeitungslaserstrahl verstanden. Die Bewegungstrajektorie kann zumindest ein Segment der Bewegungsbahn für den Bearbeitungslaser umfassen. Die Begriffe "dynamische Laserstrahlbewegungseinheit" und "Laserstrahlbewegungseinheit" werden vorliegend synonym verwendet. Ferner bedeuten der Begriff "Bewegung des Bearbeitungslaserstrahls durch den Schneidkopf" und Abwandlungen davon eine Bewegung des Bearbeitungslaserstrahls durch Bewegen des Schneidkopfs mit der Schneidkopfbewegungseinheit. Unter dem Begriff "Schnittkante" wird vorliegend eine oder mehrere Schnittkanten eines erzeugten, d.h. geschnittenen, Werkstückteils verstanden. Die Begriffe "Vorrichtung zum Laserschneiden eines Werkstücks und zum Erzeugen von Werkstückteilen" und "Vorrichtung zum Laserschneiden" werden vorliegend synonym verwendet. Die Begriffe "Bearbeitungslaserstrahl" und "Laserstrahl" werden ebenfalls synonym genutzt. Der Begriff "Bewegungstrajektorie" beinhaltet eine vollständige Bewegungstrajektorie und/oder ein oder mehrere Segmente einer Bewegungstrajektorie. Der Begriff "vorbestimmte Kontur" beinhaltet eine vollständige vorbestimmte Kontur und/oder ein oder mehrere Segmente einer vorbestimmten Kontur. Der Begriff "geschnittene Kontur" beinhaltet eine vollständige geschnittene Kontur und/oder ein oder mehrere Segmente einer geschnittenen Kontur.
Die Begriffe "hochfrequente, strahlformende Bewegung" oder "dynamische Bewegung" des Laserstrahls oder "hochfrequent bewegter" oder "dynamisch bewegter" Laserstrahl und Abwandlungen davon bedeuten vorliegend, dass der Laserstrahl hochfrequent, beispielsweise mit Frequenzen von 10 Hz bis 15 kHz, insbesondere über 500 Hz, bewegt wird. Analog gilt für den Begriff "dynamische Strahlformung", dass die Strahlformung durch dynamisch bewegliche, orientierbare und/oder verstellbare Elemente der Laserstrahlbewegungseinheit erfolgt, beispielsweise mit Frequenzen von 10 Hz bis 15 kHz, insbesondere über 500 Hz. Für den Begriff "dynamisch beweglich" gilt Analoges.

In allen Ausführungsformen kann die Laserquelle zum Erzeugen eines Bearbeitungslaserstrahls derart ausgebildet sein, dass ein kontinuierlicher und/oder diskontinuierlicher, insbesondere gepulster, Bearbeitungslaserstrahl bereitgestellt wird.

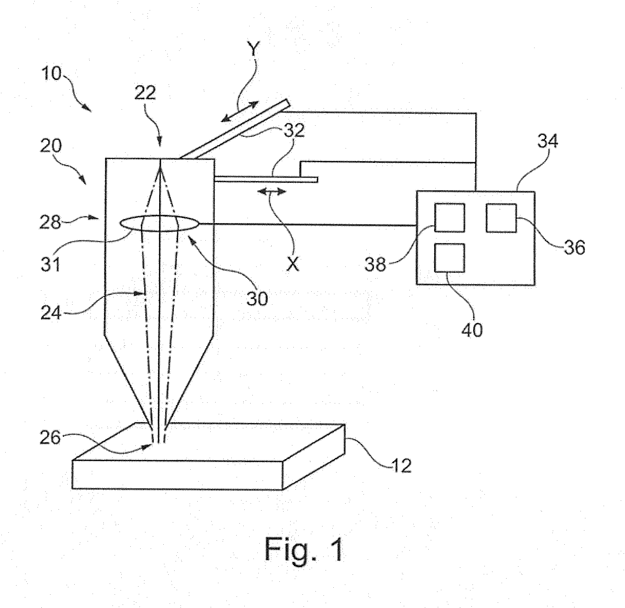

Fig. 1 zeigt schematisch als ein erstes Ausführungsbeispiel eine Vorrichtung 10 zum Laserschneiden eines Werkstücks 12 und zum Erzeugen von Werkstückteilen. Bei dem Werkstück 12 handelt es sich im vorliegenden Beispiel um ein Blech aus Edelmetall, aus dem durch Laserschneiden Werkstückteile mit einer vorbestimmten Kontur erzeugt werden. Die Vorrichtung 10 zum Laserschneiden ist mit einem Schneidkopf 20 versehen. Der Schneidkopf 20 weist eine Schnittstelle 22 für eine Laserquelle zum Erzeugen eines Bearbeitungslaserstrahls 24 mit einer Leistung von 1kW auf. Vorliegend ist die Schnittstelle 22 an einem ersten Ende des Schneidkopfs 20 angeordnet. Alternativ kann die Schnittstelle 22 auch seitlich am Schneidkopf 20 vorgesehen sein, um den Laserstrahl 24 seitlich in den Schneidkopf einzuleiten. An einem dem ersten Ende entgegengesetzten zweiten Ende des Schneidkopfs 20 ist eine Austrittsöffnung 26 für den Bearbeitungslaserstrahl 24 vorgesehen. Zwischen der Schnittstelle 22 und der Austrittsöffnung 26 ist eine Laserstrahloptik 28 vorgesehen. Ist die Schnittstelle 22 am ersten Ende des Schneidkopfs angeordnet, wird der Laserstrahl 24 mittels der Laserstrahloptik 28 mit seiner Ausbreitungsrichtung im Wesentlichen parallel zur zentralen Achse des Schneidkopfs durch diesen geführt. Ist die Schnittstelle 22 in einer Seite des Schneidkopfs 20 vorgesehen, wird der Laserstrahl 24 mittels der Laserstrahloptik 28 zumindest einmal umgelenkt und durch die Austrittsöffnung 26 des Schneidkopfs 20 geführt.

Die Laserstrahloptik 28 weist mindestens eine dynamische Laserstrahlbewegungseinheit 30 zum Erzeugen einer hochfrequenten, strahlformenden Bewegung, insbesondere einer hochfrequenten Oszillation, des Bearbeitungslaserstrahls 24 zumindest senkrecht zu seiner Ausbreitungsrichtung auf, z.B. ein DBS-System. Als dynamische Laserstrahlbewegungseinheit 30 ist im vorliegenden Beispiel ein dynamisch bewegliches optisches Element 31 zur Strahlformung des Laserstrahls vorgesehen, das im Strahlengang des Laserstrahls 24 positioniert oder positionierbar ist. Das optische Element 31 ist im vorliegenden Beispiel eine mit einem oder mehreren Piezo-Aktuatoren (nicht gezeigt) dynamisch verkippbare, fokussierende Linse, die dynamisch bewegt den Laserstrahl 24 dynamisch formt und den Bearbeitungslaserstrahl 24 senkrecht zu seiner Ausbreitungsrichtung bewegt. Dabei kann auch dessen Intensitätsverteilung senkrecht zu seiner Ausbreitungsrichtung eingestellt werden. Die fokussierende Linse hat in diesem Beispiel eine Masse von ungefähr 30 g. Die fokussierende Linse ist mit dem Aktuator dynamisch beweglich, insbesondere über einen oder mehrere Zeiträume hochfrequent beweglich, mit Frequenzen über 100 Hz, bevorzugt über 500 Hz.

In einer Abwandlung des vorliegenden Beispiels ist als optisches Element 31 der dynamischen Laserstrahlbewegungseinheit 30 mindestens eine den Bearbeitungslaserstrahl 24 reflektierende bewegliche Oberfläche vorgesehen, die derart im Strahlengang angeordnet und ausgerichtet ist, dass sie den Bearbeitungsstrahl 24 umlenkt. Der Bearbeitungslaserstrahl 24 kann damit, wenn er seitlich in den Schneidkopf 20 geleitet wird, innerhalb des Schneidkopfs z.B. um 90° umgelenkt werden, bevor er auf das Werkstück 12 geleitet wird. Die reflektierende Oberfläche ist mittels mindestens einem oder mehreren Aktuatoren, z.B. Piezo-Aktuatoren, zumindest teilweise dynamisch verstellbar. Beispielsweise ist die mindestens eine bewegliche Oberfläche mittels mindestens eines Aktuators im Ganzen dynamisch verstellbar. Ferner kann die mindestens eine bewegliche Oberfläche eine Oberflächeneinheit der Laserstrahlführungseinrichtung bereitstellen, deren Oberflächengeometrie, insbesondere deren Krümmung, mit Aktuatoren dynamisch verstellbar ist. Dadurch kann nicht nur der Bearbeitungslaserstrahl zumindest senkrecht zu seiner Ausbreitungsrichtung geformt und/oder bewegt werden, sondern es kann auch die Divergenz des Bearbeitungslaserstrahls verändert und/oder die Fokuslage des Bearbeitungslaserstrahls parallel zu dessen Ausbreitungsrichtung verschoben werden.

Beispielsweise kann die Laserstrahlbewegungseinheit 30 als das optische Element 31 einen dynamisch orientierbaren und planen Spiegel aus z.B. beschichtetem SiC (Siliziumcarbid) beinhalten, der die bewegliche Oberfläche bereitstellt, die den Bearbeitungslaserstrahl reflektiert. Es ist als Aktuator mindestens ein Piezo-Aktuator vorgesehen, mit dem der Spiegel dynamisch beweglich und dadurch orientierbar ist. Die Einheit aus Spiegel und mindestens einem Aktuator wird auch Piezo-Scanner genannt. Im Falle mehrerer Aktuatoren ist jeder Piezo-Aktuator individuell ansteuerbar. Beispielsweise handelt es sich um einen Piezo-Aktuator auf Basis einer modifizierten PZT(Blei-Zirkonat-Titanat)-Keramik mit einer typischen Antriebsspannung von 120 V. Für die Laserbearbeitung wird der Spiegel mit der beweglichen Oberfläche durch den mindestens einen Piezo-Aktuator derart gekippt, dass der Bearbeitungslaserstrahl 24 umgelenkt wird. Gleichzeitig wird die Oberfläche unter Bereitstellung von für die Umlenkung geeigneten Kippwinkeln durch den Piezo-Aktuator dynamisch bewegt, so dass der Bearbeitungslaserstrahl 24 dynamisch bewegt wird. Auf diese Weise wird das Strahlparameterprodukt des Bearbeitungslaserstrahls 24 und/oder die Intensitätsverteilung des Laserstrahlspots auf dem Werkstück 12 für das Laserschneiden wie gewünscht gestaltet, da der Fokalpunkt des Bearbeitungslaserstrahls 24 zumindest senkrecht zu dessen Ausbreitungsrichtung dynamisch mit Frequenzen z.B. zwischen 10 Hz und 15 kHz bewegt und so der auf das Werkstück auftreffende Laserstrahlspot geformt wird.

In einer weiteren Abwandlung des ersten Beispiels enthält die Laserstrahlbewegungseinheit 30 als das optische Element 31 mindestens zwei bewegliche reflektierende Oberflächen, die Teil eines Galvanometer-Scanners sind. Der Galvanometer-Scanner kann hierfür zwei Spiegel enthalten, die jeweils eine bewegliche Oberfläche bereitstellen. Diese sind jeweils beispielsweise mittels individuell ansteuerbaren Galvanometern als Aktuatoren individuell dynamisch beweglich. Der Galvanometer-Scanner ist beispielweise mit zwei derart orientierbaren Spiegeln versehen, dass der Bearbeitungslaserstrahl 24 mindestens einmal in einem Winkel größer 90° und mindestens einmal in einem Winkel kleiner 90° umgelenkt wird. Im Betrieb werden die zwei Spiegel derart zu einander orientiert und bewegt, dass der Bearbeitungslaserstrahl 15 zweimal umgelenkt und gleichzeitig dynamisch bewegt wird. Dadurch können mittels dynamischer Strahlformung nahezu beliebige Intensitätsverteilungen des Strahlspots und/oder beliebige Strahlparameterprodukte des Bearbeitungslaserstrahls 24 bereitgestellt werden.

In einer anderen Abwandlung des ersten Beispiels weist die Laserstrahlbewegungseinheit 30 als reflektierende dynamisch bewegliche Oberfläche des optischen Elements 31 einen Segmentspiegel mit mehreren voneinander getrennten, nebeneinander benachbart angeordneten Spiegelsegmenten auf, die ein Muster bilden. Jedes Spiegelsegment besitzt z.B. eine Gold-Beschichtung, ist reflektiv für den Bearbeitungslaserstrahl 24 und ist mittels einem Piezo-Aktuator individuell dynamisch orientierbar. Die Laserstrahlbewegungseinheit 30 stellt somit eine den Bearbeitungslaserstrahl 24 reflektierende, segmentierte Gesamtoberfläche bereit, deren Oberflächengeometrie, insbesondere deren Krümmung, hoch dynamisch verstellbar ist. Der Segmentspiegel wir für eine dynamische Strahlformung eingesetzt. Dafür wird die Oberfläche des Segmentspiegels mit einer genügend hohen Frequenz über 10 Hz, insbesondere über 100 Hz, derart verändert, dass der resultierende Fokus auf dem Werkstück 12 zumindest lateral zur Ausbreitungsrichtung des Laserstrahls dynamisch bewegt wird. Durch die dynamische Strahlformung kann das Strahlparameterprodukt und/oder die Intensitätsverteilung des zeitlich integrierten Bearbeitungslaserstrahls wie gewünscht modifiziert werden.

In einer zusätzlichen Abwandlung des ersten Beispiels weist die Laserstrahlbewegungseinheit 30 als dynamisch strahlformendes optisches Element 31 einen verformbaren Spiegel (DM, Dynamic Mirror) auf, um eine bewegliche, reflektierende, kontinuierliche Oberfläche bereitzustellen. Der Spiegel wird durch eine Membran aus verformbaren Material gebildet, die mittels Aktuatoren dynamisch verformbar ist. Auf der Unterseite der Membran befinden sich zu diesem Zweck individuell ansteuerbare, in einem Muster gleichmäßig verteilte Aktuatoren. Die Oberseite der Membran ist mit einer hochreflektierenden dielektrischen Multilagen-Beschichtung versehen, die für Laserstrahlen bis 120 kW bei einer Wellenlänge von 1060 bis 1090 nm geeignet ist. Die bewegliche, reflektierende, kontinuierliche Oberfläche des verformbaren Spiegels (DM, Dynamic Mirror) kann analog wie der zuvor beschriebenen Segmentspiegel betrieben werden.

Die Vorrichtung 10 zum Laserschneiden beinhaltet ferner eine Schneidkopfbewegungseinheit 32, die den Schneidkopf 20 und somit den darin geführten Bearbeitungslaserstrahl 24 zumindest in X- und/oder Y-Richtung über das Werkstück 12 bewegt. Beispielsweise ist der Schneidkopf 20 an einem Schlitten (nicht gezeigt) angebracht, der in X-Richtung auf einer in Y-Richtung verfahrbaren Brücke (nicht gezeigt) verschiebbar ist, wie in Fig. 1 mit Pfeilen schematisch veranschaulich ist. Die trägen Komponenten der Schneidkopfbewegungseinheit 32 und der Schneidkopf 20 haben zusammen in diesem Beispiel eine Masse von ungefähr 400 kg. In Abwandlungen des Beispiels kann auch eine Bewegung des Schneidkopfs 20 in Z-Richtung, d.h. in einer Richtung senkrecht zum Werkstück, mit der Schneidkopfbewegungseinheit 32 ausführbar sein.

Die Vorrichtung 10 zum Laserschneiden ist mit einer Steuerungseinheit 34 zum Steuern der Schneidkopfbewegungseinheit 32 und der Laserstrahlbewegungseinheit 30 versehen. Die Steuerungseinheit 34 ist, drahtlos oder drahtgebunden, datenleitend mit der Schneidkopfbewegungseinheit 32 und der Laserstrahlbewegungseinheit 30 verbunden. Die Steuerungseinheit 34 weist ein Bestimmungsmodul 36 auf, mit dem mindestens eine Bewegungstrajektorie des Bearbeitungslaserstrahls 24 über das Werkstück 12 bestimmt werden kann. Die Bestimmung der Bewegungstrajektorie erfolgt in mindestens einer Werkstückebene gemäß mindestens einer vorbestimmten Kontur der zu erzeugenden Werkstückteile. Die Steuerungseinheit 34 weist ferner eine Speichereinheit 38 auf, in der mindestens ein vorbestimmter Parameter ausgewählt aus einem Bewegungsparameter der Schneidkopfbewegungseinheit 32, einem Bewegungsparameter der Laserstrahlbewegungseinheit 30 und einem Parameter einer Abweichung einer geschnittenen Kontur von der vorbestimmten Kontur gespeichert und von dort abrufbar ist. Die Steuerungseinheit 34 enthält außerdem ein Optimierungsmodul 40 zum Anpassen der Bewegungstrajektorie. Die Anpassung, d.h. Optimierung, der Bewegungstrajektorie des Bearbeitungslaserstrahls 24 erfolgt durch eine Überlagerung der Bewegung des Bearbeitungslaserstrahls 24 durch den Schneidkopf 20 mit der hochfrequenten, strahlformenden Bewegung des Bearbeitungslaserstrahls 24 durch die Laserstrahlbewegungseinheit 30 auf Basis des aus der Speichereinheit 38 abrufbaren mindestens einen vorbestimmten Parameters.

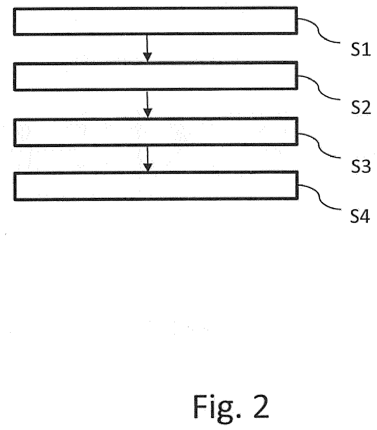

Im Betrieb der Vorrichtung 10 zum Laserschneiden wird, wie in Fig. 2 veranschaulicht ist, in Schritten S1 bis S4 das Werkstück 12 geschnitten und Werkstückteile werden erzeugt. Im Schritt S1 wird mittels des Bestimmungsmoduls 40 der Steuerungseinheit 34 mindestens eine Bewegungstrajektorie X, Y des Bearbeitungslaserstrahls 24 in mindestens einer Werkstückebene gemäß mindestens einer vorbestimmten Kontur X, Y der zu erzeugenden Werkstückteile bestimmt. Im Schritt S2 wird mittels des Optimierungsmoduls 40 der Steuerungseinheit 34 die Bewegungstrajektorie durch eine Überlagerung der Bewegung des Bearbeitungslaserstrahls durch den Schneidkopf 20 mit der hochfrequenten, strahlformenden Bewegung des Bearbeitungslaserstrahls durch die dynamische Laserstrahlbewegungseinheit 30 auf Basis des aus der Speichereinheit 38 abrufbaren mindestens einen vorbestimmten Parameters angepasst. Dadurch wird die Bewegungstrajektorie optimiert und eine angepasste Bewegungstrajektorie X°, Y° erhalten. Im ersten Ausführungsbeispiel wird die Bewegungstrajektorie durch das Optimierungsmodul 40 optimiert, indem der Schneidkopfbewegungseinheit 32 eine Bewegungstrajektorie X*, Y* und der Laserstrahlbewegungseinheit 30 Ablenkungen U, V des optischen Elements, U in X-Richtung und V in Y-Richtung, zugeordnet werden, was eine angepasste Bewegungstrajektorie X°, Y° ergibt. Im Schritt S3 wird der Bearbeitungslaserstrahl 24 mit einer Leistung von mindestens 200 W, bevorzugt mindestens 1kW, erzeugt und das Werkstück 12 wird mit dem Bearbeitungslaserstrahl 24 geschnitten. Im Schritt S4 wird der Bearbeitungslaserstrahl 24 über das Werkstück 12 mit der Schneidkopfbewegungseinheit 32 durch den Schneidkopf 20 bewegt und durch die Laserstrahlbewegungseinheit 30 zumindest senkrecht zu seiner Ausbreitungsrichtung hochfrequent bewegt und geformt, gemäß der angepassten Bewegungstrajektorie X°, Y°. Die Schritte S1 und S2 können gleichzeitig oder nach einander oder sequentiell durchgeführt werden, d.h. die Optimierung der Bewegungstrajektorie des Bearbeitungslaserstrahls kann während dem oder nach dem Bestimmen der Bewegungstrajektorie erfolgen.

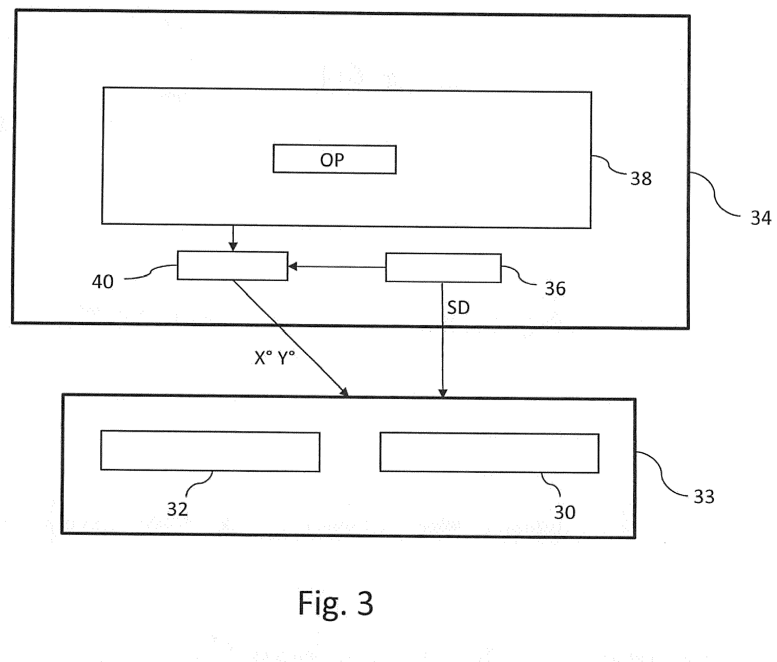

Fig. 3 stellt schematisch das Zusammenwirken der Komponenten der Vorrichtung 10 beim Laserschneiden des ersten Ausführungsbeispiels dar. In der Steuerungseinheit 34 wird mit dem Bestimmungsmodul 36 die Bewegungstrajektorie X, Y gemäß der vorbestimmten Kontur X, Y bestimmt. Daraus wird mit dem Optimierungsmodul 40 anhand von in der Speichereinheit 38 gespeicherten Optimierungsparametern OP als vorbestimmte Parameter die optimierte und angepasste Bewegungstrajektorie X°, Y° ermittelt. Mit Letzterer werden die Bewegungen der dynamischen Laserstrahlbewegungseinheit 30 und der Schneidkopfbewegungseinheit 32, die kombiniert ein Laserstrahlbewegungssystem 33 bilden, beim Laserschneiden gesteuert. Auf diese Weise wird die Bewegung des Bearbeitungslaserstrahls 24 durch den Schneidkopf 20 mit der hochfrequenten, strahlformenden Bewegung des Bearbeitungslaserstrahls 24 durch die dynamische Laserstrahlbewegungseinheit 30 gemäß der angepassten Bewegungstrajektorie X°, Y° überlagert.

In allen Ausführungsformen und Ausführungsbeispielen können in der Speichereinheit 38 zusätzliche Parameter gespeichert sein und daraus abgerufen werden. Beispielsweise können in der Speichereinheit 38 gespeichert sein: die vorbestimmte Kontur X, Y, z.B. ein Schneidplan oder NC-Code, der im Bestimmungsmodul 36, z.B. einer CNC- oder PLC-Steuerung, genutzt wird, und Maschinen- und Prozessparameter, die im Bestimmungsmodul 36 und/oder im Optimierungsmodul 40 genutzt werden. Im ersten Ausführungsbeispiel, Fig. 3, können die genannten zusätzlichen Parameter vom Bestimmungsmodul 36 und/oder vom Optimierungsmodul 40 abgerufen und genutzt werden. Ferner kann das Laserstrahlbewegungssystem 33 eine Maschinensteuerung enthalten, an die die Daten vom Optimierungsmodul 40 und vom Bestimmungsmodul 36 übermittelt werden. Das Bestimmungsmodul 36 kann Steuerungsdaten SD, wie z.B. Daten zur Z-Achse der Schneidkopfbewegungseinheit 32, Gasdruck des Schneidgases, Laserleistung für den Bearbeitungslaserstrahl 24, an das Laserstrahlbewegungssystem 33 übermitteln. Zwischen Bestimmungsmodul 36 und dem Laserstrahlbewegungssystem 33 bzw. dessen Maschinensteuerung kann ein Puffermodul geschaltet sein, das die Ausführung der Befehle vom Bestimmungsmodul 36, z.B. um 100 ms, verzögert, um für die Optimierung in der Optimierungseinheit 40 die notwendige Zeit zur Verfügung zu haben und eine zeitliche Synchronisation der Komponenten der Vorrichtung 10 zum Laserschneiden zu ermöglichen. In allen Ausführungsformen und Ausführungsbeispielen kann das Optimierungsmodul 40 Ergebnisse des Bestimmungsmoduls 36 abrufen und nutzen.

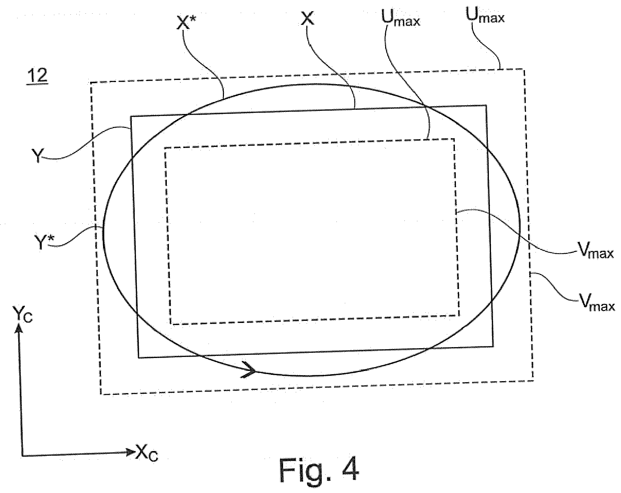

Fig. 4 zeigt gemäß dem ersten Ausführungsbeispiel schematisch eine Bewegungstrajektorie des Bearbeitungslaserstrahls über dem Werkstück 12 und eine vorbestimmten Kontur X, Y eines Werkstückteils. Es ist ein Koordinatensystem mit Achsen Xc und Yc dargestellt. Die Koordinaten geben die Position des Bearbeitungslaserstrahls 24 zum Zeitpunkt K wieder, d.h. mit K ist ein zeitdiskreter Schritt definiert. Die vorbestimmte Kontur X, Y des zu schneidenden Werkstückteils ist in diesem Beispiel rechteckig. Die der Schneidkopfbewegungseinheit 32 durch das Optimierungsmodul 40 zugeordnete Bewegungstrajektorie X*, Y* des Bearbeitungslaserstrahls 24 ist als eine ovale Bewegungsbahn in einer Richtung z.B. im Gegenuhrzeigersinn (siehe Pfeil) erkennbar, die von der vorbestimmten Kontur X, Y abweicht. Die die vorbestimmte Kontur X, Y einschließenden, mit gestrichelten Linien dargestellten Rechtecke geben die maximalen Bewegungsamplituden, d.h. die maximalen Auslenkungen, Uₘₐₓ in X-Richtung und Vₘₐₓ in Y-Richtung des dynamisch beweglichen optischen Elementes der Laserstrahlbewegungseinheit 30 ausgehend von der vorbestimmten Kontur X, Y, wieder.

Als vorbestimmte Parameter werden in diesem Beispiel Optimierungsparameter OP in Form von dynamischen Grenzen der Schneidkopfbewegungseinheit 32 und der Laserstrahlbewegungseinheit 30 genutzt. Das Optimierungsmodul 40 ermittelt ausgehend von diesen vorbestimmten Parametern die angepasste Bewegungstrajektorie X°, Y° durch Überlagerung der Bewegung des Bearbeitungslaserstrahls 24 durch den Schneidkopf 20 mit der hochfrequenten, strahlformenden Bewegung des Bearbeitungslaserstrahls 24 durch die dynamische Laserstrahlbewegungseinheit 30. Dabei wird der Schneidkopfbewegungseinheit 32 die Bewegungstrajektorie X*, Y* zugeordnet und der Laserstrahlbewegungseinheit 30 werden die Auslenkungen U und V zugeordnet, so dass die resultierende angepasste Bewegungstrajektorie X°, Y° im Wesentlichen der vorbestimmten Kontur X, Y des zu schneidenden Werkstückteils entspricht. Es werden als Koordinaten für die angepasste Bewegungstrajektorie X°, Y° erhalten: X_{K°} = X_{K*} + U_{K} und Y_{K°} = Y_{K*} + V_{K}, mit K ∈ [0, T] und T als Zeitdauer der Bewegungstrajektorie oder eines Segments der Bewegungstrajektorie. Durch Bewegen des Bearbeitungslaserstrahls 24 mit der Schneidkopfbewegungseinheit 32 und mit der Laserstrahlbewegungseinheit 30 gemäß der angepassten Bewegungstrajektorie X°, Y° wird beim Laserschneiden ein rechteckiges Werkstückteil mit im Wesentlichen der vorbestimmten Kontur X, Y erzeugt, wobei Konturfehler vermieden oder zumindest reduziert werden.

Im vorliegenden Beispiel wird zur Reduktion von Konturfehlern die der vorbestimmten Kontur des zu schneidenden Werkstückteils entsprechende Bewegungstrajektorie aufgeteilt: eine optimierte Zuweisung von Anteilen der Bewegungstrajektorie auf die Laserstrahlbewegungseinheit führt zu geringeren Anteilen der trägen mechanischen Achsen und des Schneidkopfs der Schneidkopfbewegungseinheit an der Bewegungstrajektorie. Die mechanischen Achsen bewegen sich ruhiger und Schwingungs-ärmer, da die hochfrequenten Bewegungsanteile von der dynamischen Laserstrahlbewegungseinheit ausgeführt werden. Deshalb gibt es weniger unerwünschte hochfrequente Anregungen der mechanischen Achsen und anderer Komponenten der Vorrichtung 10 und weniger Konturfehler beim Laserschneiden. Dies gilt insbesondere an Ecken, Winkeln oder anderen kleinen oder scharfen Strukturen der vorbestimmten Kontur. Ferner wird die Stabilität der Komponenten der Vorrichtung 10 zum Laserscheiden erhöht und deren Abnutzung reduziert. Die Zuweisung der Anteile an der Bewegungstrajektorie wird durch ein Optimierungsproblem gelöst. Es wird beispielsweise eine Minimierung des Rucks und/oder der Beschleunigung der mechanischen Achsen und des Schneidkopfs erreicht unter Einhaltung von Randbedingungen wie beispielsweise dynamische Grenzen der mechanischen Achsen der Schneidkopfbewegungseinheit, dynamische Grenzen der dynamischen Laserstrahlbewegungseinheit und eine maximale Auslenkung des dynamisch beweglichen optischen Elements. Auf diese Weise wird die angepasste, optimierte Bewegungstrajektorie erhalten.

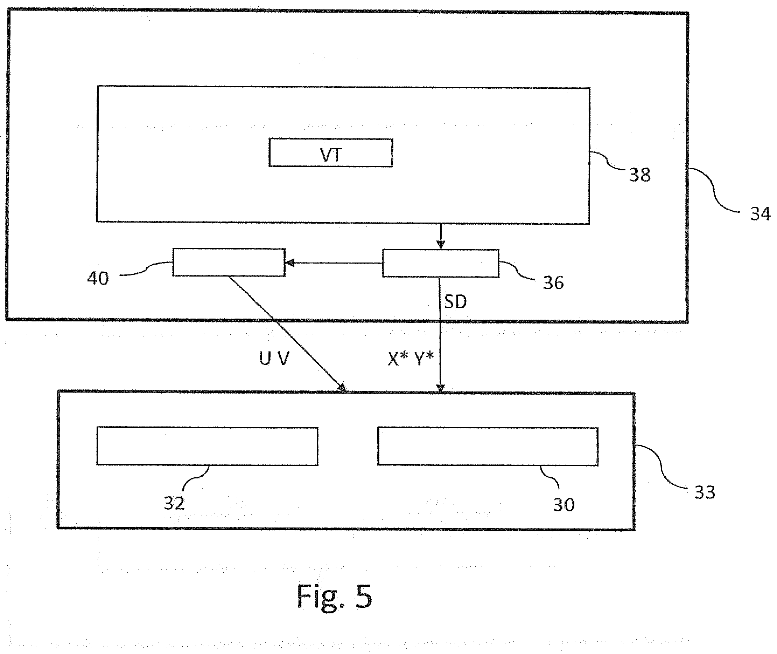

Fig. 5 zeigt schematisch eine Darstellung des Zusammenwirkens der Komponenten der Vorrichtung 10 zum Laserschneiden gemäß einem zweiten Ausführungsbeispiel. Dies ist ein Beispiel für eine Ausführungsform, in der das Optimierungsmodul 40 zum Anpassen der Bewegungstrajektorie auf Basis einer vergrößerten Verrundungstoleranz der Schneidkopfbewegungseinheit 32 ausgebildet ist. In der Speichereinheit 38 ist als vorbestimmter Parameter eine Verrundungstoleranz VT der Schneidkopfbewegungseinheit 32 gespeichert. In der Speichereinheit 38 können ferner die zuvor zum ersten Ausführungsbeispiel genannten zusätzlichen Parameter gespeichert sein und vom Bestimmungsmodul 36 und/oder vom Optimierungsmodul 40 abgerufen und genutzt werden. Die Verrundungstoleranz VT gibt eine gezielte Verrundung der Bewegungstrajektorie der Schneidkopfbewegungseinheit 32 an Ecken und kleinen Radien der vorbestimmten Kontur X, Y vor. Die Verrundungstoleranz VT ist vorgegeben als kleiner oder gleich der maximalen Bewegungsamplituden Uₘₐₓ in X-Richtung und Vₘₐₓ in Y-Richtung des dynamisch beweglichen optischen Elementes der Laserstrahlbewegungseinheit 30. Je größer die Verrundungstoleranz VT gewählt wird, desto weniger muss die Geschwindigkeit des Schneidkopfs 20 in Ecken und kleinen Radien der vorbestimmten Kontur beim Laserschneiden reduziert werden. Es wird eine größere Verrundungstoleranz VT genutzt als für den alleinigen Einsatz der Schneidkopfbewegungseinheit 32 vorgegeben wäre. In der Speichereinheit können typische Verrundungstoleranzen und vergrößerte Verrundungstoleranzen gespeichert sein und daraus abgerufen werden. Im vorliegenden Beispiel wird eine vergrößerte Verrundungstoleranz VT vom Bestimmungsmodul 36 aus der Speichereinheit 38 abgerufen Das Bestimmungsmodul 36 bestimmt daraus die Bewegungstrajektorie X*, Y* mit Verrundung und eine Bewegungstrajektorie X, Y ohne Verrundung, d.h. gemäß der vorbestimmten Kontur X, Y. Die Verrundungstoleranz VT kann beispielsweise mittels HMI (Human Machine Interface) oder einer automatischen Regel ("Performance Mode") angepasst werden. Das Bestimmungsmodul 36 kann die Verrundungstoleranz VT auch dem Optimierungsmodul zur Verfügung stellen. Das Optimierungsmodul 40 berechnet die Differenz zwischen der Bewegungstrajektorie X*, Y* mit Verrundung und der Bewegungstrajektorie X, Y ohne Verrundung und teilt der Laserstrahlbewegungseinheit 30 die Differenzwerte als Ablenkungen U, V des optischen Elements zu. Es werden als Koordinaten für die Differenzwerte U und V ermittelt: U_{K} = X_{K*} - X_{K} und V_{K} = Y_{K*} - Y_{K}, mit K ∈ [0, T] und T als Zeitdauer der Bewegungstrajektorie oder eines Segments der Bewegungstrajektorie. Damit wird der Differenzwert U als Bewegung des dynamisch beweglichen optischen Elementes der Laserstrahlbewegungseinheit 30 in X-Richtung ermittelt und der Differenzwert V wird als Bewegung des dynamisch beweglichen optischen Elementes der Laserstrahlbewegungseinheit 30 in Y-Richtung ermittelt. Die resultierenden optimierten Bewegungsamplituden, d.h. die Auslenkungen U, V des optischen Elements 31 der dynamischen Laserstrahlbewegungseinheit 30 werden durch das Optimierungsmodul 40 an das Laserstrahlbewegungssystem 33 weitergegeben. Die Werte X*, Y* geben die Bewegung des Schneidkopfs 20 in X- und Y-Richtung vor und werden durch das Bestimmungsmodul 36, z.B. über das Puffermodul zur zeitlichen Synchronisation, an das Laserstrahlbewegungssystem 33 weitergegeben. So wird durch Kombination, d.h. Überlagerung, der Auslenkungen U, V und der Bewegungstrajektorie X*, Y* eine angepasste Bewegungstrajektorie X°, Y° erhalten. Im Betrieb der Vorrichtung 10 dieses Beispiels werden bei Verwendung einer hohen Verrundungstoleranz für die Optimierung der Bewegungstrajektorie höhere Schneidgeschwindigkeiten in Ecken und kleinen Radien der vorbestimmten Kontur ermöglicht. Dadurch wird für den Laserschneidprozess pro Werkstückteil weniger Zeit benötigt und die Produktivität der Vorrichtung 10 zum Laserschneiden wird erhöht.

Das vorliegende Ausführungsbeispiel kann z.B. in CNC gesteuerten Maschinen eingesetzt werden, in denen die Bewegungstrajektorie durch einen Kern, z.B. ISG-Kernel, berechnet wird. Dieser berücksichtigt, unter anderem, die dynamischen Eigenschaften der mechanischen Achsen. Es können auch Verrundungen der vorbestimmten Kontur bzw. der Trajektorie eingestellt werden, wodurch - abhängig von der Verrundungstoleranz - die Geschwindigkeit in Ecken und kleinen Radien nicht oder weniger reduziert werden muss. Benutzt man nun im Ausführungsbeispiel der Fig. 5 für derartige Maschinen eine hohe Verrundungstoleranz, so wird die Geschwindigkeit des Schneidkopfs 20 in Ecken und kleinen Radien der vorbestimmten Kontur grösser, jedoch wird auch die Abweichung zwischen geschnittenem Teil und gewünschtem Teil größer. Die durch die hohe Verrundungstoleranz entstandene Abweichung wird durch die synchrone, der Bewegung des Schneidkopfs 20 überlagerte Bewegung der Laserstrahbewegungseinheit 30 kompensiert. Dadurch kann die Produktivität der Maschine und auch die Genauigkeit beim Schneiden der zu erzeugenden Werkstückteile erhöht werden. Durch die Verrundungstoleranz an Ecken und kleinen Radien der vorbestimmten Kontur muss dort nicht nur die Geschwindigkeit des Schneidkopfes 20 nicht reduziert werden, durch die kompensierende Bewegung der Laserstrahbewegungseinheit 30 resultieren auch weniger hochfrequente Anregungen der mechanischen Achsen der Schneidkopfbewegungseinheit 32, wodurch mechanische Schwingungen der Vorrichtung 10 zum Laserschneiden bzw. von Komponenten der Vorrichtung 10 vermieden werden. Ferner wird die Stabilität der Komponenten der Vorrichtung 10 zum Laserscheiden erhöht und deren Abnutzung reduziert.

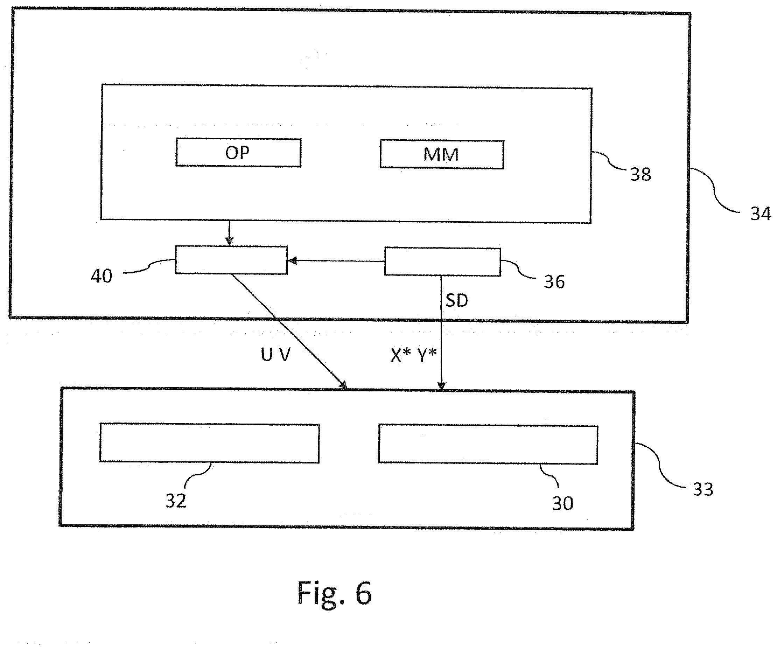

Fig. 6 stellt schematisch das Zusammenwirken der Komponenten der Vorrichtung 10 zum Laserschneiden gemäß einem dritten Ausführungsbeispiel dar. In der Speichereinheit 38 ist zusätzlich zu Optimierungsparametern OP ein Maschinenmodell MM gespeichert. Das Maschinenmodell MM repräsentiert das kinematische Verhalten des sich bewegenden Schneidkopfs 20, in einigen Beispielen auch der mechanischen Achsen, der Schneidkopfbewegungseinheit 32 und schätzt als Bewegungsparameter der Schneidkopfbewegungseinheit Zustandsdaten der Bewegung des Schneidkopfs, und ggf. der mechanischen Achsen, und eine daraus resultierende Abweichung der geschnittenen Kontur von der vorbestimmten Kontur X, Y. Das Optimierungsmodul 40 steht zum Einlesen der Optimierungsparameter OP und des Maschinenmodells MM mit der Speichereinheit 38 in Datenverbindung. In der Speichereinheit 38 können ferner die zuvor zum ersten Ausführungsbeispiel genannten zusätzlichen Parameter gespeichert sein und von der Optimierungseinheit 40 und/oder vom Bestimmungsmodul 36 abgerufen und genutzt werden.

Als Maschinenmodell MM kann ein Modell genutzt werden, das die kinematischen Eigenschaften von Werkzeugmaschinen charakterisiert. Insbesondere kann ein Modell (z. B. Kalman Filter) genutzt werden, mit dem Konturfehler am Tool Center Point (TCP) geschätzt werden. Weitere Maschinenmodelle, die im vorliegenden Beispiel eingesetzt werden können, basieren auf Differentialgleichungen und/oder es kann ein Zwei-Massen-Modell genutzt werden, bei dem z.B. die Position des TCP mittels einem Differentialgleichungssystem 4. Ordnung (Zustandsraumdarstellung) beschrieben wird. Komplexere Modelle für eine TCP-Schätzung können auch Reibungseffekte, Umkehrspiel, Temperaturabhängigkeiten und weitere, teils nichtlineare Effekte berücksichtigen. Maschinenmodelle zur TCP Schätzung können auch durch Modellreduktionen von FEM(Finite-Element-Methoden)-Modellen erstellt werden.

Im Betrieb bestimmt das Bestimmungsmodul 36 die mit der Schneidkopfbewegungseinheit 32 auszuführende Bewegungstrajektorie X*, Y* des Bearbeitungslaserstrahls 24 als X* = X und Y* = Y. Die von den mechanischen Achsen der Schneidkopfbewegungseinheit 32 auszuführende ursprüngliche Bewegungstrajektorie X, Y des Schneidkopfs 20 wird daher nicht verändert. Das Optimierungsmodul 40 ruft die Bewegungstrajektorie X*, Y*, die Optimierungsparameter OP und das Maschinenmodell MM ab und führt eine modellbasierte Schätzung von Konturfehlern durch. Darauf basierend berechnet das Optimierungsmodul 40 Auslenkungen U und V des dynamisch beweglichen optischen Elementes der Laserstrahlbewegungseinheit 30 zur Kompensation von Konturfehlern, mit Auslenkungen U_{K} in X-Richtung und V_{K} in Y-Richtung und K ε [0, T] mit T als Zeitdauer der Bewegungstrajektorie oder eines Segments der Bewegungstrajektorie. Die resultierenden optimierten Bewegungsamplituden, d.h. die Auslenkungen U und V, des optischen Elements der dynamischen Laserstrahlbewegungseinheit 30 werden durch das Optimierungsmodul 40 an das Laserstrahlbewegungssystem 33 weitergegeben. Das Bestimmungsmodul 36 gibt die Bewegungstrajektorie X*, Y* des Bearbeitungslaserstrahls 24, z.B. über das Puffermodul zur zeitlichen Synchronisation, an das Laserstrahlbewegungssystem 33 weiter. So wird durch Kombination, d.h. Überlagerung der Auslenkungen U, V und der Bewegungstrajektorie X*, Y*, eine angepasste Bewegungstrajektorie X°, Y° erhalten. Mit dem vorliegenden Ausführungsbeispiel können Konturfehler, beispielsweise am TCP, modellbasiert geschätzt werden. Die geschätzten Konturfehler werden durch die Laserstrahlbewegungseinheit 30 kompensiert. Weil das optische Element 31 der Laserstrahlbewegungseinheit 30 dabei hochdynamisch, d.h. hochfrequent, bewegt wird, können auch Konturfehler, die beispielsweise aus hochfrequenten Schwingungen von Komponenten der Vorrichtung 10 resultieren, kompensiert werden und genauer geschnittene Werkstückteile erhalten werden.

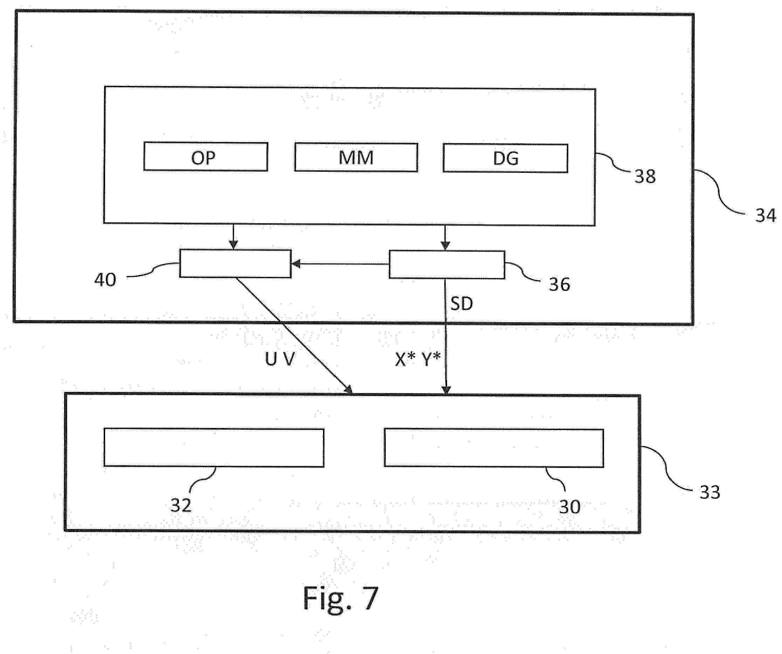

Fig. 7 stellt schematisch das Zusammenwirken der Komponenten der Vorrichtung 10 zum Laserschneiden gemäß einem vierten Ausführungsbeispiel dar, das eine Abwandlung des dritten Ausführungsbeispiels, gezeigt in Fig. 6, ist. Dies ist ein Beispiel für eine Ausführungsform, in der das Optimierungsmodul 40 zum Anpassen der Bewegungstrajektorie auf Basis einer vergrößerten dynamischen Grenze der Schneidkopfbewegungseinheit 32 ausgebildet ist. In der Speichereinheit 38 ist zusätzlich zu Optimierungsparametern OP und dem Maschinenmodell MM mindestens eine gezielt vergrößerte dynamische Grenze DG der Schneidkopfbewegungseinheit 32, z.B. in Form von geänderten Maschinen- und/oder Prozessparametern, gespeichert. Es kann auch mindestens eine typische dynamische Grenze DG der Schneidkopfbewegungseinheit 32 gespeichert sein. Das Bestimmungsmodul 36 bestimmt die Bewegungstrajektorie X*, Y* des Bearbeitungslaserstrahls 24 als X* = X und Y* = Y und ruft im vorliegenden Beispiel hierfür die mindestens eine gezielt vergrößerte dynamische Grenze DG aus der Speichereinheit ab. Das Optimierungsmodul 40 ruft die Bewegungstrajektorie X*, Y*, die mindestens eine gezielt erhöhte dynamische Grenze DG der Schneidkopfbewegungseinheit 32, die Optimierungsparameter OP und das Maschinenmodell MM ab. Das Optimierungsmodul 40 führt auf dieser Basis eine modellbasierte Schätzung von Konturfehlern durch und ermittelt Auslenkungen U und V des dynamisch beweglichen optischen Elementes der Laserstrahlbewegungseinheit 30, mit Auslenkungen U_{K} in X-Richtung und V_{K} in Y-Richtung und K ∈ [0, T] mit T als Zeitdauer der Bewegungstrajektorie oder eines Segments der Bewegungstrajektorie. Die resultierenden optimierten Bewegungsamplituden, d.h. die Auslenkungen U und V, des optischen Elements der dynamischen Laserstrahlbewegungseinheit 30 werden durch das Optimierungsmodul 40 an das Laserstrahlbewegungssystem 33 weitergegeben. Das Bestimmungsmodul 36 gibt die ursprüngliche Bewegungstrajektorie X, Y des Bearbeitungslaserstrahls als X*, Y* unverändert an die Schneidkopfbewegungseinheit 32 des Laserstrahlbewegungssystem 33 weiter. So wird durch Kombination, d.h. Überlagerung der Auslenkungen U, V und der Bewegungstrajektorie X*, Y* eine angepasste Bewegungstrajektorie X°, Y° erhalten. Auf diese Weise werden geschätzte erhöhte Abweichungen von der vorbestimmten Kontur, d.h. geschätzte Konturfehler, mit Auslenkungen des optischen Elements der Laserstrahlbewegungseinheit 30 kompensiert. Mit diesem Ausführungsbeispiel kann die Produktivität der Vorrichtung 10 indirekt gesteigert werden: durch das absichtliche Erhöhen der dynamischen Grenzen, z.B. der dynamischen Grenzen der mechanischen Achsen, der Schneidkopfbewegungseinheit 32 werden die Abweichungen von der vorbestimmten Kontur, z.B. am TCP, grösser und die für den Laserschneidprozess pro Werkstückteil benötigte Zeit kleiner. Gleichzeitig werden die größeren Abweichungen von der vorbestimmten Kontur durch die dynamische Laserstrahlbewegungseinheit 30 kompensiert und so genauer geschnittene Werkstückteile erhalten.

In einem fünften Ausführungsbeispiel wird ein Prozessmodell PM (nicht gezeigt) mit Komponenten einer oder mehrerer beliebiger anderer Ausführungsbeispiele der Vorrichtung zum Laserschneiden, z.B. dem ersten bis vierten Ausführungsbeispiel, kombiniert. In der Speichereinheit 34 ist jeweils zusätzlich das Prozessmodell PM gespeichert, das den Laserschneidprozess repräsentiert und Zustandsdaten des Laserschneidprozesses und eine daraus resultierende Abweichung der geschnittenen Kontur von der vorbestimmten Kontur X, Y schätzt. Es wird eine resultierende Abweichung zwischen entsprechenden Istzustandsdaten und entsprechenden Sollzustandsdaten und somit die Qualität eines geschnittenen Werkstückteils geschätzt. Insbesondere kann die hohe Laserleistung beim Laserschneiden als Zustandsdaten des Laserschneidprozesses berücksichtigt werden. Das Optimierungsmodul 40 ruft das Prozessmodell PM aus der Speichereinheit 34 ab, mit dem auf Basis der Zustandsdaten optimierte Prozessparameter, wie beispielweise die Laserleistung, die Vorschubgeschwindigkeit, auch Schneidgeschwindigkeit genannt, den Gasdruck eines Schneidgases und/oder den Abstand der Austrittsöffnung des Schneidkopfs vom Werkstück berechnet werden. Die optimierten Prozessparameter werden vom Optimierungsmodul 40 bei der Ermittlung der angepassten Bewegungstrajektorie X°, Y° zusätzlich berücksichtigt. Dies gilt auch bei der Ermittlung der optimierten Bewegungsamplituden, d.h. der Auslenkungen, des optischen Elements der dynamischen Laserstrahlbewegungseinheit 30. Dadurch wird deren hohe Dynamik genutzt, wodurch auch aus unerwünschten hochfrequenten Anregungen von Komponenten der Vorrichtung 10 resultierende Konturfehler kompensiert werden können, und eine geringere Anregung der Komponenten und damit ein geringerer Verschleiß derselben erreicht werden. Durch Nutzen des Prozessmodells wird zudem die Schnittqualität gefördert. Eine Kopplung zwischen Prozessmodell und Maschinenmodell kann mittels Vorschubgeschwindigkeit des Schneidkopfs und/oder Schneidgeschwindigkeit und/oder Düsenabstand erfolgen. Beispielsweise kommt es vor, dass bei einem zu großen Vorschub ein blechförmiges Werkstück nicht durchgeschnitten werden kann. Dies kann mittels dem Prozessmodell PM geschätzt und an das Bestimmungsmodul 36 zurückgeführt werden und von diesem bei der Bestimmung der Bewegungstrajektorie berücksichtigt werden.

In einem sechsten Ausführungsbeispiel wird mit der Laserstrahlbewegungseinheit 30 anderer Ausführungsbeispiele der Vorrichtung zum Laserschneiden eine hochfrequente Oszillation des Fokalpunktes des Bearbeitungslaserstrahls auf einem Fokalpunktoszillationsweg in Form einer oder mehrerer Lissajous-Figuren realisiert. Die Steuerungseinheit 34 weist eine Datenbank DB (nicht gezeigt) von vorbestimmten 2- und/oder 3-dimensionalen Lissajous-Figuren auf. Die Laserstrahlbewegungseinheit 30 ist zum Induzieren einer hochfrequenten Oszillation des Fokalpunktes des Bearbeitungslaserstrahls 24 auf einem Fokalpunktoszillationsweg in Form einer Lissajous-Figur oder einer Kombination von mehr als einer Lissajous-Figur auf Basis der Datenbank ausgebildet. Beispielsweise kann als das optische Element 31 der Laserstrahlbewegungseinheit 30 eine Linse vorgesehen sein, die funktionell mit einem oder mehreren Aktuatoren als Anregungsmittel zum Anregen einer Oszillation der Linse verbunden ist. Das oder die Anregungsmittel übertragen im Betrieb der Vorrichtung 10 zum Laserschneiden eine Anregung auf die Linse, welche dadurch zum Ausführen einer wiederholten oszillierenden Bewegung veranlasst wird. Diese oszillierende Bewegung führt zu einer Oszillation des Fokalpunktes des Bearbeitungslaserstrahls 24 zumindest senkrecht zu dessen Ausbreitungsrichtung. Alternativ kann als das optische Element der Laserstrahlbewegungseinheit 30 eine optische Faser, insbesondere ein Faserende, eine Kupplung für eine optische Faser oder eine Endkappe einer optischen Faser vorgesehen sein, wobei das freie Ende des optischen Elements mit dem/den Aktuatoren funktionell verbunden ist. Gemäß einer weiteren Alternative kann als das optische Element der Laserstrahlbewegungseinheit 30 ein achsversetzter Parabolspiegel mit einem Zentrum vorgesehen sein, mit dem der Bearbeitungslaserstrahl 24 umgelenkt und sein Fokalpunkt auf einem Fokalpunktoszillationsweg oszilliert wird. Durch Ausführen einer hochfrequenten Oszillation des Fokalpunktes des Bearbeitungslaserstrahls 24 auf einem Fokalpunktoszillationsweg in Form einer Lissajous-Figur oder einer Kombination von mehr als einer Lissajous-Figur mittels der dynamischen Laserstrahlbewegungseinheit 30 beim Anpassen der Bewegungstrajektorie im Optimierungsmodul 40 kann die Schnittqualität zusätzlich verbessert werden, insbesondere die Schnittqualität bei Werkstücken höherer Dicke.

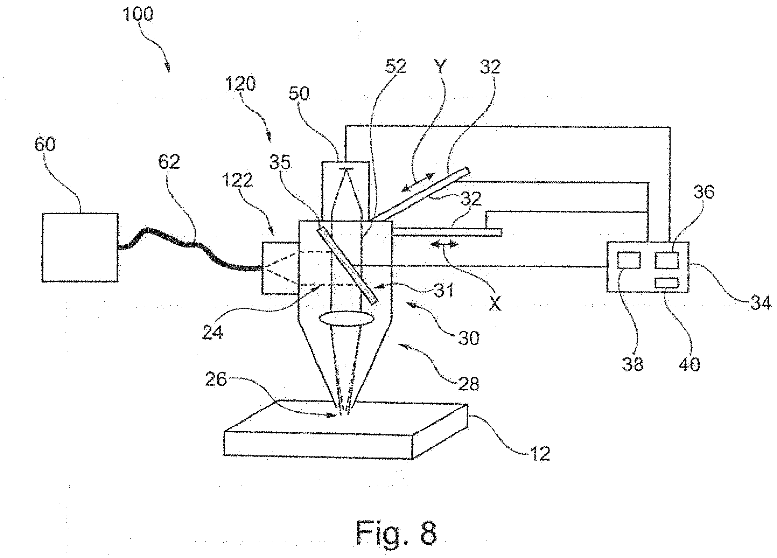

Fig. 8 zeigt schematisch als ein siebtes Ausführungsbeispiel eine Vorrichtung 100 zum Laserschneiden des Werkstücks 12 und zum Erzeugen von Werkstückteilen. Es werden im Folgenden Unterschiede zur Vorrichtung 10 der Fig. 1 beschrieben. Das siebte Ausführungsbeispiel kann entsprechend abgewandelt analog wie das erste bis sechste Ausführungsbeispiel der Vorrichtung 10 ausgestaltet und betrieben werden.

Die Vorrichtung 100 zum Laserschneiden ist mit einem Schneidkopf 120 versehen. Der Schneidkopf 120 weist eine Schnittstelle 122 für eine Laserquelle zum Erzeugen eines Bearbeitungslaserstrahls 24 mit einer Leistung von 1kW auf. Vorliegend ist die Schnittstelle 122 in einer Seite des Schneidkopfs 20 vorgesehen. An der Schnittstelle 122 ist eine Laserquelle 60 vorgesehen, die mittels einer optischen Faser 62 an der Schnittstelle 122 angebunden ist. Als das dynamisch bewegliche optische Element 31 der dynamischen Laserstrahlbewegungseinheit 30 der Laserstrahloptik 28 ist ein dynamischer Strahlformer mit mindestens einer beweglichen reflektierenden Oberflächen vorgesehen, mit dem der Laserstrahl 24 zumindest einmal umgelenkt wird. Beispielsweise kann, wie in Fig. 8 dargestellt, ein dichroitischer Umlenkspiegel 35 zur Strahlformung des Laserstrahls genutzt werden, der im Strahlengang des Laserstrahls 24 positioniert oder positionierbar ist. Zusätzlich kann, wie in Fig. 8 gezeigt, zwischen dem Umlenkspiegel 35 und der Austrittsöffnung 26 eine optionale fokussierende Linse angeordnet sein. Der Umlenkspiegel 35 ist im vorliegenden Beispiel mit einem oder mehreren Piezo-Aktuatoren (nicht gezeigt) dynamisch verkippbar. Dynamisch bewegt lenkt der Umlenkspiegel 35 den Laserstrahl 24 um, bewegt gleichzeitig den Bearbeitungslaserstrahl 24 zumindest senkrecht zu seiner Ausbreitungsrichtung und formt ihn dabei dynamisch. Dadurch kann auch dessen Intensitätsverteilung senkrecht zu seiner Ausbreitungsrichtung eingestellt werden. Der Umlenkspiegel 35 hat in diesem Beispiel eine Masse von 4 bis 15 g, z.B. ungefähr 10 g. Der Umlenkspiegel 35 ist mit dem Aktuator dynamisch beweglich, insbesondere über einen oder mehrere Zeiträume hochfrequent beweglich, mit Frequenzen über 100 Hz, bevorzugt über 500 Hz.

Am ersten Ende des Schneidkopfs 120 ist eine Detektorvorrichtung 50 vorgesehen, die zur Beobachtung des Werkstücks 12 und optional des Laserschneidprozesses dient. Die Detektorvorrichtung 50 ist beispielsweise eine für ein Prozesslicht 52 empfindliche Kamera. Das Prozesslicht 52 ist die vom Werkstück 12 durch die Austrittsöffnung 26 emittierte Strahlung und enthält durch die Laserbearbeitung des Werkstücks entstehende Strahlung und/oder reflektiertes Beleuchtungslicht. Damit kann die beim Laserscheiden erzeugte Schnittkante abgebildet und gemessen werden. Ferner kann die Detektorvorrichtung 50 eine adaptive optische Einheit aufweisen. Die adaptive optische Einheit, z.B. eine adaptive Optik oder adaptive Linse (focus tunable lens) erlaubt es, dass die Schärfe-Ebene der Detektoreinrichtung parallel zur Ausbreitungsrichtung des Bearbeitungsstrahls variiert werden kann, je nach Fokuslage, Werkstückdicke und gewünschter Beobachtungsebene.

Das optische Element 31 ist als ein dichroitischer Spiegel 35 ausgeführt. Im vorliegenden Beispiel handelt es sich um einen Glasspiegel (z.B. SiO₂, fused silica) oder um einen anderen, für sichtbares Prozesslicht transparenten Spiegel. Der dichroitische Spiegel 35 ist dabei zumindest einseitig, auf der der Laserquelle zugewandten Seite, mit einer dielektrischen Beschichtung versehen. Die Größe des Spiegels 35 ist derart gewählt, dass sie mit dem Durchmesser des Bearbeitungslaserstrahls 24 an der Position des Spiegels korrespondiert. Der dichroitische Spiegel 35 reflektiert zumindest teilweise den Bearbeitungslaserstrahl 24 und ist für zumindest einen Teil des Prozesslichts 52 selektiv transparent.

In der Vorrichtung 100 zum Laserschneiden ist die Steuerungseinheit 34 auch mit der Detektorvorrichtung 50 drahtgebunden oder drahtlos datenleitend verbunden und kann so für die Beobachtung der erzeugten Schnittkante, für die Messung von Oberflächendefekten und optional für eine Prozessüberwachung eingesetzt werden. In der Speichereinheit 38 können ferner die zuvor zum ersten Ausführungsbeispiel genannten zusätzlichen Parameter gespeichert sein und vom Bestimmungsmodul 36 und/oder vom Optimierungsmodul 40 abgerufen und genutzt werden.

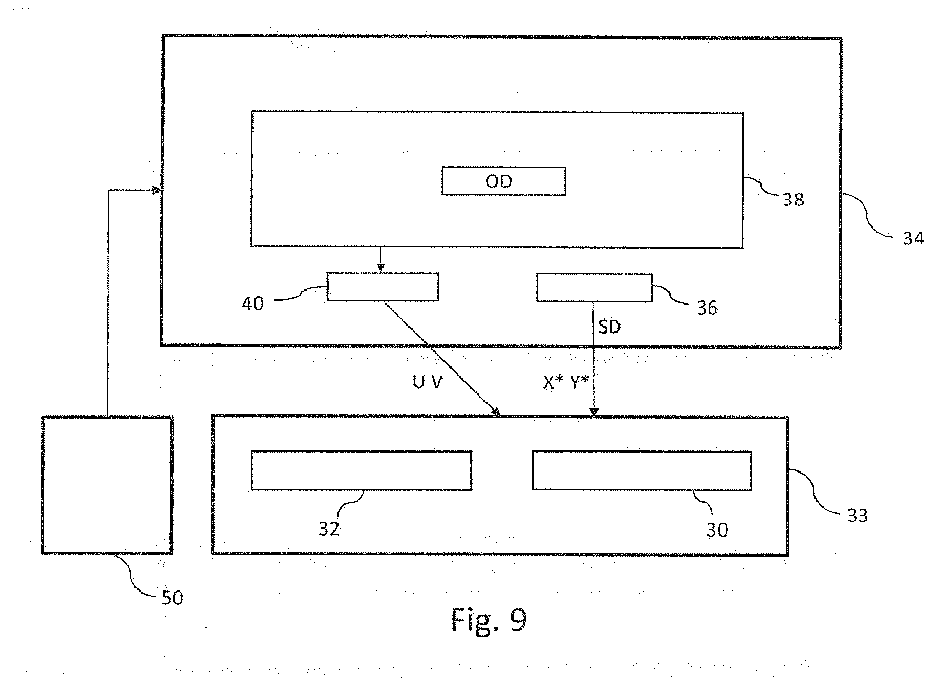

Fig. 9 stellt schematisch das Zusammenwirken der Komponenten der Vorrichtung 100 zum Laserschneiden gemäß des siebten Ausführungsbeispiels dar. Im Betrieb der Vorrichtung 100 wird der Bearbeitungslaserstrahl 24 über das Werkstück 12 mit der Schneidkopfbewegungseinheit 32 durch den Schneidkopf 20 bewegt und das Werkstück 12 wird geschnitten. Dabei werden von der Detektorvorrichtung 50 Oberflächendefekte OD der Schnittkante des Werkstücks 12, z.B. Riefen, Rillen oder Grat, als eine gemessene Abweichung der geschnittenen Kontur von der vorbestimmten Kontur X, Y des Werkstücks erfasst und resultierende Parameter ermittelt. Diese Parameter werden an die Speichereinheit 38 weitergegeben und von dort vom Optimierungsmodul 40 als vorbestimmter Parameter abgerufen. Darauf basierend induziert das Optimierungsmodul 40 eine den Oberflächendefekten OD entgegenwirkende Modulation der dynamischen Bewegung des Bearbeitungslaserstrahls 24 durch die Laserstrahlbewegungseinheit 30. Das Optimierungsmodul 40 berechnet zu diesem Zweck Auslenkungen U und V des dynamisch beweglichen optischen Elementes 31, hier des Umlenkspiegels 35, der Laserstrahlbewegungseinheit 30 zur Kompensation der Oberflächendefekte, mit Auslenkungen U_{K} n X-Richtung und V_{K} in Y-Richtung und K ∈ [0, T] mit T als Zeitdauer der Bewegungstrajektorie oder eines Segments der Bewegungstrajektorie. Die resultierenden optimierten Bewegungsamplituden, d.h. die Auslenkungen U und V, des Umlenkspiegels 35 der dynamischen Laserstrahlbewegungseinheit 30 werden durch das Optimierungsmodul 40 an das Laserstrahlbewegungssystem 33 weitergegeben. Das Bestimmungsmodul 36 bestimmt die Bewegungstrajektorie X*, Y* des Bearbeitungslaserstrahls 24 als X* = X und Y* = Y und gibt diese, z.B. über das Puffermodul zur zeitlichen Synchronisation, an die Schneidkopfbewegungseinheit 32 des Laserstrahlbewegungssystem 33 weiter. Die ursprüngliche, von den mechanischen Achsen der Schneidkopfbewegungseinheit 32 auszuführende Bewegungstrajektorie X, Y des Schneidkopfs 20 wird daher nicht verändert. So wird durch Kombination, d.h. Überlagerung der Auslenkungen U, V und der Bewegungstrajektorie X*, Y*, eine angepasste Bewegungstrajektorie X°, Y° erhalten.

Im Betrieb der Vorrichtung 100 können insbesondere Abmessungen und/oder periodisch wiederkehrende Muster, z.B. deren Amplitude und Frequenz, der Oberflächendefekte ermittelt werden. Beispielsweise wird bei einem Brennschneiden des Werkstücks 12 unter Verwendung von Sauerstoff als Schneidgas ein Wärmebild des Prozesslichts 52 im NIR/IR-Bereich aufgenommen. In Bereichen der Schnittkante ohne Oberflächendefekte sind lokale Intensitätsminima des Wärmebilds mit verminderter Strahlungsintensität vorhanden. Die Größe der Abmessungen der Intensitätsminima können im Wärmebild beobachtet werden. Bei unerwünschter Abnahme dieser Größe induziert das Optimierungsmodul 40 eine den Oberflächendefekten entgegenwirkende Modulation der dynamischen Bewegung des Bearbeitungslaserstrahls durch die Laserstrahlbewegungseinheit 30.

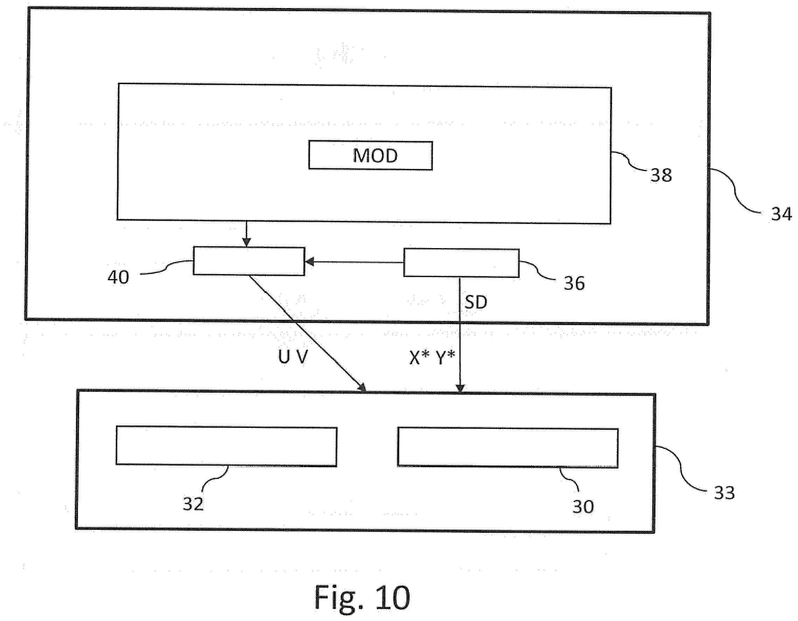

Fig. 10 stellt schematisch das Zusammenwirken der Komponenten der Vorrichtung 100 zum Laserschneiden gemäß eines achten Ausführungsbeispiels dar. Das achte Ausführungsbeispiel ist eine Abwandlung des siebten Ausführungsbeispiels. Es ist im achten Ausführungsbeispiel an der Vorrichtung 100 kein Detektor 50 vorgesehen. Vielmehr ist in der Speichereinheit 38 ein Modell MOD zur Schätzung von Oberflächendefekten gespeichert und vom Optimierungsmodul 40 abrufbar. Als Modell MOD zur Schätzung von Oberflächendefekten kann beispielsweise ein Modell zur Schätzung von Riefen genutzt werden, mit der die Rauheit, d.h. die Amplitude und Frequenz, der Riefen der Schnittkante durch einen gedämpften Oszillator mit Störterm berechnet werden kann. Alternativ kann die Rauheit durch ein Adaptives Neuro-Fuzzy Interferenz System (ANFIS) modelliert werden. Mit dem Modell können Oberflächendefekte der Schnittkante des Werkstücks 12, z.B. Riefen, Rillen oder Grat, als Abweichung der geschnittenen Kontur von der vorbestimmten Kontur X, Y des Werkstücks geschätzt werden. Im Betrieb ruft das Optimierungsmodul 40 das Modell MOD zur Schätzung von Oberflächendefekten und führt eine modellbasierte Schätzung von Oberflächendefekten durch. Darauf basierend induziert das Optimierungsmodul 40 eine den Oberflächendefekten entgegenwirkende Modulation der dynamischen Bewegung des Bearbeitungslaserstrahls 24 durch die Laserstrahlbewegungseinheit 30. Das Optimierungsmodul 40 berechnet dafür Auslenkungen U und V des dynamisch beweglichen optischen Elementes 31, hier des Umlenkspiegels 35, der Laserstrahlbewegungseinheit 30 zur Kompensation der Oberflächendefekte, mit Auslenkungen U_{K} in X-Richtung und V_{K} in Y-Richtung und K ∈ [0, T] mit T als Zeitdauer der Bewegungstrajektorie oder eines Segments der Bewegungstrajektorie. Die resultierenden optimierten Bewegungsamplituden, d.h. die Auslenkungen U und V, des Umlenkspiegels 35 der dynamischen Laserstrahlbewegungseinheit 30 werden durch das Optimierungsmodul 40 an das Laserstrahlbewegungssystem 33 weitergegeben. Das Bestimmungsmodul 36 bestimmt die Bewegungstrajektorie X*, Y* des Bearbeitungslaserstrahls 24 als X* = X und Y* = Y und gibt diese, z.B. über das Puffermodul zur zeitlichen Synchronisation, an die Schneidkopfbewegungseinheit 32 des Laserstrahlbewegungssystems 33 weiter. Die ursprüngliche, von den mechanischen Achsen der Schneidkopfbewegungseinheit 32 auszuführende Bewegungstrajektorie X, Y des Schneidkopfs 20 wird daher nicht verändert. So wird durch Kombination, d.h. Überlagerung der Auslenkungen U, V und der Bewegungstrajektorie X*, Y*, eine angepasste Bewegungstrajektorie X°, Y° erhalten.

Die durch die Vorrichtungen des ersten bis achten Ausführungsbeispiels ausführbaren Verfahren können in einer neunten Ausführungsform nach einem vorangegangenen Laserschneiden des Werkstücks 12 durchgeführt werden, das mit der durch das Bestimmungsmodul 36 bestimmten mindestens einen Bewegungstrajektorie ohne Einsatz des Optimierungsmoduls 40 ausgeführt wurde. Dadurch können am Werkstück 12, insbesondere an der Schnittkante, anhaftende Schmelze und/oder Schmelztröpfchen und Grat oder andere Oberflächendefekte, wie z.B. Riefen, durch erneutes Bearbeiten des Werkstücks bzw. der erzeugten Werkstückteile mit dem durch das Optimierungsmodul 40 optimierten Bearbeitungslaserstrahl 24 und gezielter Aufschmelzung und Ausblasen mit einem Schneidgas oder Verdampfen reduziert und/oder entfernt werden.

### Bezuaszeichenliste

- 10: Vorrichtung zum Laserschneiden
- 12: Werkstück
- 20: Schneidkopf
- 22: Schnittstelle
- 24: Bearbeitungslaserstrahl
- 26: Austrittsöffnung
- 28: Laserstrahloptik
- 30: Laserstrahlbewegungseinheit
- 31: optisches Element
- 32: Schneidkopfbewegungseinheit
- 33: Laserstrahlbewegungssystem
- 34: Steuerungseinheit
- 35: Umlenkspiegel
- 36: Bestimmungsmodul
- 38: Speichereinheit
- 40: Optimierungsmodul
- 50: Detektoreinheit
- 52: Prozesslicht
- 60: Laserquelle
- 62: optische Faser
- 100: Vorrichtung zum Laserschneiden
- 120: Schneidkopf
- 122: Schnittstelle
- X_{C}: X-Achse Koordinatensystem
- Y_{C}: Y-Achse Koordinatensystem
- K: Zeitpunkt
- T: Zeitdauer
- OP: Optimierungsparameter
- SD: Steuerungsdaten
- VT: Verrundungstoleranz
- MM: Maschinenmodell
- DG: Dynamische Grenze
- PM: Prozessmodell
- DB: Datenbank
- OD: Oberflächendefekt
- MOD: Modell zur Schätzung von Oberflächendefekten
- U: Auslenkung des optischen Elements in X-Richtung
- V: Auslenkung des optischen Elements in Y-Richtung
- X: vorbestimmte Kontur in X-Richtung
- Y: vorbestimmte Kontur in Y-Richtung
- X, Y: vorbestimmte Kontur
- X, Y: Bewegungstrajektorie gemäß vorbestimmter Kontur
- X*, Y*: Bewegungstrajektorie
- X°, Y°: angepasste (optimierte) Bewegungstrajektorie

## Patentansprüche

1. Vorrichtung (10; 100) zum Laserschneiden eines Werkstücks (12) und Erzeugen von Werkstückteilen,
mit einem Schneidkopf (20),
wobei der Schneidkopf eine Schnittstelle (22) für eine Laserquelle zum Erzeugen eines Bearbeitungslaserstrahls (24) mit einer Leistung von mindestens 200 W, bevorzugt mindestens 1kW, eine Austrittsöffnung (26) für den Bearbeitungslaserstrahl, und eine Laserstrahloptik (28) zwischen der Schnittstelle und der Austrittsöffnung aufweist, wobei die Laserstrahloptik(28) mindestens eine dynamische Laserstrahlbewegungseinheit (30) zum Erzeugen einer hochfrequenten, strahlformenden Bewegung des Bearbeitungslaserstrahls zumindest senkrecht zu seiner Ausbreitungsrichtung aufweist; mit einer Schneidkopfbewegungseinheit (32) zum Ausführen einer Bewegung des Bearbeitungslaserstrahls über das Werkstück (12) durch den Schneidkopf (20); und mit einer Steuerungseinheit (34) zum Steuern der Schneidkopfbewegungseinheit (32) und der Laserstrahlbewegungseinheit (30),
wobei die Steuerungseinheit aufweist
- ein Bestimmungsmodul (36) zum Bestimmen mindestens einer Bewegungstrajektorie (X, Y) des Bearbeitungslaserstrahls in mindestens einer Werkstückebene gemäß mindestens einer vorbestimmten Kontur (X, Y) der zu erzeugenden Werkstückteile;
- eine Speichereinheit (38), aus der mindestens ein vorbestimmter Parameter ausgewählt aus einem Bewegungsparameter der Schneidkopfbewegungseinheit (32), einem Bewegungsparameter der Laserstrahlbewegungseinheit (30) und einem Parameter einer Abweichung einer geschnittenen Kontur von der vorbestimmten Kontur abrufbar ist; und
- ein Optimierungsmodul (40) zum Anpassen der Bewegungstrajektorie (X, Y) durch eine Überlagerung der Bewegung des Bearbeitungslaserstrahls durch den Schneidkopf (20) mit der hochfrequenten, strahlformenden Bewegung des Bearbeitungslaserstrahls durch die Laserstrahlbewegungseinheit (30) auf Basis des aus der Speichereinheit (38) abrufbaren mindestens einen vorbestimmten Parameters.

2. Vorrichtung nach Anspruch 1,
wobei der Bewegungsparameter der Schneidkopfbewegungseinheit mindestens ein Parameter ist ausgewählt aus
- einer dynamischen Grenze (DG) der Schneidkopfbewegungseinheit,
- einer Verrundungstoleranz (VT) der Schneidkopfbewegungseinheit an einem Winkel der vorbestimmten Kontur, und
- einer Verrundungstoleranz (VT) der Schneidkopfbewegungseinheit an einem Radius der vorbestimmten Kontur.

3. Vorrichtung nach Anspruch 1 oder 2,
wobei der Bewegungsparameter der Laserstrahlbewegungseinheit mindestens ein Parameter ist ausgewählt aus
- einer dynamischen Grenze (DG) der Laserstrahlbewegungseinheit und
- einer mit der Laserstrahlbewegungseinheit erzeugbaren maximalen Bewegungsamplitude des Bearbeitungslaserstrahls.

4. Vorrichtung nach einem der vorstehenden Ansprüche,
wobei der Parameter einer Abweichung einer geschnittenen Kontur von der vorbestimmten Kontur (X, Y) mindestens ein Parameter ist ausgewählt aus
- einer geschätzten Abweichung,
- einem aus einer gemessenen Abweichung resultierenden Parameter,
- einer Verrundung der geschnittenen Kontur an einem Winkel der vorbestimmten Kontur,
- einer Verrundung der geschnittenen Kontur an einem Radius der vorbestimmten Kontur,
- einem geschätzten Oberflächendefekt (OD) einer Schnittkante, und
- einem aus einem gemessenen Oberflächendefekt einer Schnittkante resultierenden Parameter.

5. Vorrichtung nach einem der vorstehenden Ansprüche,
wobei das Optimierungsmodul (40) zum Anpassen der Bewegungstrajektorie auf Basis mindestens einer vergrößerten Verrundungstoleranz (VT) der Schneidkopfbewegungseinheit (32) und zum Kompensieren der daraus resultierenden Abweichung der geschnittenen Kontur von der vorbestimmten Kontur ausgebildet ist.

6. Vorrichtung nach einem der vorstehenden Ansprüche,
wobei in der Speichereinheit (38) ein Maschinenmodell (MM) gespeichert ist, das das kinematische Verhalten des sich bewegenden Schneidkopfs (20) repräsentiert und als Bewegungsparameter der Schneidkopfbewegungseinheit Zustandsdaten der Bewegung des Schneidkopfs und als weiteren Parameter eine daraus resultierende Abweichung der geschnittenen Kontur von der vorbestimmten Kontur schätzt, und wobei das Optimierungsmodul (40) zum Einlesen des Maschinenmodells mit der Speichereinheit (38) in Datenverbindung steht.

7. Vorrichtung nach einem der vorstehenden Ansprüche,
wobei das Optimierungsmodul zum Anpassen der Bewegungstrajektorie auf Basis mindestens einer vergrößerten dynamischen Grenze (DG) der Schneidkopfbewegungseinheit (32) ausgebildet ist.

8. Vorrichtung nach einem der vorstehenden Ansprüche,
wobei in der Speichereinheit (38) ein Prozessmodell gespeichert ist, das den Laserschneidprozess repräsentiert und als Parameter Zustandsdaten des Laserschneidprozesses und eine daraus resultierende Abweichung der geschnittenen Kontur von der vorbestimmten Kontur schätzt, und wobei das Optimierungsmodul (40) zum Einlesen des Prozessmodells mit der Speichereinheit in Datenverbindung steht.

9. Vorrichtung nach einem der vorstehenden Ansprüche,
wobei die Steuerungseinheit (34) eine Datenbank von vorbestimmten 2- und/oder 3-dimensionalen Lissajous-Figuren aufweist und die Laserstrahlbewegungseinheit (30) zum Induzieren einer hochfrequenten Oszillation des Fokalpunktes des Bearbeitungslaserstrahls auf einem Fokalpunktoszillationsweg in Form einer Lissajous-Figur oder einer Kombination von mehr als einer Lissajous-Figur auf Basis der Datenbank ausgebildet ist.

10. Vorrichtung nach einem der vorstehenden Ansprüche,
wobei am oder im Schneidkopf (20) eine mit der Speichereinheit (38) datenleitend verbundene Detektoreinrichtung (50) zur Messung eines Oberflächendefekts einer Schnittkante, insbesondere von Riefen, als den Parameter einer Abweichung der geschnittenen Kontur von der vorbestimmten Kontur (X, Y) vorgesehen ist; und/oder wobei in der Speichereinheit (38) ein Modell (MOD) zur Schätzung eines Oberflächendefekts einer Schnittkante, insbesondere von Riefen, gespeichert ist, das als Parametereinen Oberflächendefekt (OD) und eine daraus resultierende Abweichung der geschnittenen Kontur von der vorbestimmten Kontur schätzt, und wobei das Optimierungsmodul (40) zum Einlesen des Modells zur Schätzung eines Oberflächendefekts mit der Speichereinheit in Datenverbindung steht.

11. Verfahren zum Laserschneiden eines Werkstücks (12) und Erzeugen von Werkstückteilen
mit einer Vorrichtung (10; 100) zum Laserschneiden eines Werkstücks und Erzeugen von Werkstückteilen nach einem der Ansprüche 1 bis 10, wobei an der Schnittstelle (22) eine Laserquelle (60, 62) zum Erzeugen eines Bearbeitungslaserstrahls mit einer Leistung von mindestens 200 W, bevorzugt mindestens 1kW, vorgesehen ist, wobei das Verfahren die Schritte aufweist
- mittels des Bestimmungsmoduls (36) der Steuerungseinheit (34) Bestimmen mindestens einer Bewegungstrajektorie des Bearbeitungslaserstrahls (24) in mindestens einer Werkstückebene gemäß mindestens einer vorbestimmten Kontur (X, Y) der zu erzeugenden Werkstückteile (S1);
- mittels des Optimierungsmoduls (40) der Steuerungseinheit (34) Anpassen der Bewegungstrajektorie durch eine Überlagerung der Bewegung des Bearbeitungslaserstrahls durch den Schneidkopf (20) mit der hochfrequenten, strahlformenden Bewegung des Bearbeitungslaserstrahls durch die dynamische Laserstrahlbewegungseinheit (30) auf Basis des aus der Speichereinheit abrufbaren mindestens einen vorbestimmten Parameters (S2);
- Erzeugen des Bearbeitungslaserstrahls (24) mit einer Leistung von mindestens 200 W, bevorzugt mindestens 1kW, und Schneiden des Werkstücks mit dem Bearbeitungslaserstrahl (S3); und
- Bewegen des Bearbeitungslaserstrahls (24) über das Werkstück durch den Schneidkopf (20) und hochfrequentes, strahlformendes Bewegen des Bearbeitungslaserstrahls zumindest senkrecht zu seiner Ausbreitungsrichtung durch die Laserstrahlbewegungseinheit (30) gemäß der angepassten Bewegungstrajektorie (X°, Y°) (S4).

12. Verfahren nach Anspruch 11,
wobei das Anpassen auf Basis mindestens einer vergrößerten Verrundungstoleranz (VT) der Schneidkopfbewegungseinheit (32) ausgeführt wird und ein Kompensieren der daraus resultierenden Abweichung der geschnittenen Kontur von der vorbestimmten Kontur beinhaltet.

13. Verfahren nach einem der Ansprüche 11 und 12,
wobei in der Speichereinheit (38) ein Maschinenmodell (MM) gespeichert ist, das das kinematische Verhalten des sich bewegenden Schneidkopfs (20) repräsentiert und als Bewegungsparameter der Schneidkopfbewegungseinheit (32) Zustandsdaten der Bewegung des Schneidkopfs und als weiteren Parameter eine daraus resultierende Abweichung der geschnittenen Kontur von der vorbestimmten Kontur schätzt, und wobei das Anpassen ein Einlesen des Maschinenmodells aus der Speichereinheit in das Optimierungsmodul (40) beinhaltet.

14. Verfahren nach einem der Ansprüche 11 bis 13,
wobei das Anpassen auf Basis mindestens einer vergrößerten dynamischen Grenze (DG) der Schneidkopfbewegungseinheit (32) ausgeführt wird.

15. Verfahren nach einem der Ansprüche 11 bis 14,
wobei in der Speichereinheit (38) ein Prozessmodell gespeichert ist, das den Laserschneidprozess repräsentiert und als Parameter Zustandsdaten des Laserschneidprozesses und eine daraus resultierende Abweichung der geschnittenen Kontur von der vorbestimmten Kontur schätzt, und wobei das Anpassen ein Einlesen des Prozessmodells aus der Speichereinheit in das Optimierungsmodul beinhaltet.

16. Verfahren nach einem der Ansprüche 11 bis 15,
wobei die Steuerungseinheit (38) eine Datenbank von vorbestimmten 2- und/oder 3-dimensionalen Lissajous-Figuren aufweist und die Laserstrahlbewegungseinheit (30) eine hochfrequente Oszillation des Fokalpunktes des Bearbeitungslaserstrahls auf einem Fokalpunktoszillationsweg in Form einer Lissajous-Figur oder einer Kombination von mehr als einer Lissajous-Figur auf Basis der Datenbank induziert.

17. Verfahren nach einem der Ansprüche 11 bis 16,
wobei am oder im Schneidkopf (120) eine mit der Speichereinheit (38) datenleitend verbundene Detektoreinrichtung (50) vorgesehen ist und die Detektoreinrichtung einen Oberflächendefekt einer Schnittkante, insbesondere Riefen, als den Parameter einer Abweichung der geschnittenen Kontur von der vorbestimmten Kontur misst; und/oder wobei in der Speichereinheit (38) ein Modell (MOD) zur Schätzung eines Oberflächendefekts der Schnittkante, insbesondere von Riefen, gespeichert ist, das als Parameter einen Oberflächendefekt und eine daraus resultierende Abweichung der geschnittenen Kontur von der vorbestimmten Kontur schätzt, und wobei das Anpassen das Einlesen des Modells zur Schätzung eines Oberflächendefekts aus der Speichereinheit (38) in das Optimierungsmodul (40) beinhaltet.

18. Verfahren nach einem der Ansprüche 11 bis 17,
wobei das Verfahren nach einem vorangegangenen Laserschneiden des Werkstücks durchgeführt wird, das mit der durch das Bestimmungsmodul (38) bestimmten mindestens einen Bewegungstrajektorie ausgeführt wurde.

19. Computerprogrammprodukt, umfassend ein oder mehrere Programmmodule, die bewirken, dass die Vorrichtung nach einem der Ansprüche 1 bis 10 Schritte des Verfahrens nach einem der Ansprüche 11 bis 18 ausführt, insbesondere wenn die Programmmodule in einen Speicher der Vorrichtung geladen werden, insbesondere umfassend mindestens ein Element ausgewählt aus dem Bestimmungsmodul und dem Optimierungsmodul.

20. Computerlesbares Medium, auf dem das Computerprogrammprodukt nach Anspruch 19 gespeichert ist.
